(19)

Europäisches Patentamt

European Patent Office

Office européen des brevets

(11) **EP 4 765 662 A1**

(12) **EUROPEAN PATENT APPLICATION**
published in accordance with Art. 153(4) EPC

(43) Date of publication:
**24.06.2026 Bulletin 2026/26**

(21) Application number: **23949671.4**

(22) Date of filing: **18.08.2023**

(51) International Patent Classification (IPC):
**H04B 7/0456** (2017.01)    **H04B 7/06** (2006.01)

(52) Cooperative Patent Classification (CPC):
**H04B 7/0456; H04B 7/06**

(86) International application number:
**PCT/JP2023/029897**

(87) International publication number:
**WO 2025/041209 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **ONODA, Takanobu**
**Tokyo 100-6150 (JP)**
• **KURITA, Daisuke**
**Tokyo 100-6150 (JP)**
• **HARADA, Hiroki**
**Tokyo 100-6150 (JP)**

• **WANG, Fan**
**Beijing 100190 (CN)**
• **HOU, Xiaolin**
**Beijing 100190 (CN)**
• **LI, Xiang**
**Beijing 100190 (CN)**
• **SUN, Weiqi**
**Beijing 100190 (CN)**
• **WANG, Jing**
**Beijing 100190 (CN)**
• **CHEN, Lan**
**Beijing, 100190 (CN)**

(74) Representative: **Hoffmann Eitle**
**Patent- und Rechtsanwälte PartmbB**
**Arabellastraße 30**
**81925 München (DE)**

(54) **WIRELESS DEVICE AND CONTROL METHOD**

(57)    This wireless device is provided with: a control unit that determines a codeword on the basis of a geometric relationship between the wireless device and an area covered by the wireless device and generates a beam that covers the area by applying the codeword; and a communication unit that outputs a signal by using the beam.

FIG. 13

**Description**

Technical Field

The present disclosure relates to a radio apparatus and a control method.

Background Art

The 3rd Generation Partnership Project (3GPP) has standardized a 5th generation mobile communication system (also referred to as 5G, New Radio (NR), or Next Generation (NG)), and is further standardizing a next generation system called Beyond 5G, 5G Evolution, or 6G.

In NR, in addition to a user terminal (may be referred to as user equipment (UE) or simply a terminal) and a radio base station (may be simply referred to as a base station), the introduction of a radio apparatus, such as a reconfigurable intelligent surface (RIS), is being considered to achieve a higher data rate and to extend a range of a coverage (for example, see Patent Literature (hereinafter, referred to as PTL) 1).

Citation List

Patent Literature

PTL 1
WO 2022/151016

Summary of Invention

However, there is room for consideration regarding the control for generating an appropriate beam according to a range to be covered in the radio apparatus under consideration for introduction.

An aspect of the present disclosure is to provide a radio apparatus and a control method each capable of performing control to generate an appropriate beam according to a range to be covered.

Solution to Problem

A radio apparatus according to an aspect of the present disclosure includes: a control section that determines a codeword based on a geometric relationship between the radio apparatus and an area covered by the radio apparatus and generates a beam that covers the area by applying the codeword; and a communication section that outputs a signal by using the beam.

Brief Description of Drawings

FIG. 1 is a diagram illustrating an example of a radio communication system according to an embodiment of the present disclosure;

FIG. 2A is a diagram illustrating an example of a distant user in a high frequency band;

FIG. 2B is a diagram illustrating an example of a non-line of sight user in a high frequency band;

FIG. 3A is a diagram illustrating an example of communication using a configuration of an NCR;

FIG. 3B is a diagram illustrating an example of communication using an RIS;

FIG. 4 is a diagram illustrating an example of a system architecture including the RIS;

FIG. 5 is a diagram illustrating an example of a near field (NF) and a far field (FF) of the RIS;

FIG. 6A is a diagram illustrating an example of DFT-based beamforming (BF);

FIG. 6B is a diagram illustrating an example of beamfocusing with an optimal phase;

FIG. 6C is a diagram illustrating an example of beamfocusing with a steering vector of a near field (NF);

FIG. 7 is a diagram illustrating an example of SSB forwarding with the RIS applied;

FIG. 8 is a diagram illustrating an example of a precoder according to Example 1-1-1;

FIG. 9 is a diagram illustrating an example of a reference point;

FIG. 10 is a diagram illustrating an example of a precoder according to Example 1-1-2;

FIG. 11 is a diagram illustrating an example of a uniform grid in Cartesian coordinates;

FIG. 12A is a diagram illustrating a first example of a calculation of a focal position;

FIG. 12B is a diagram illustrating a second example of the calculation of the focal position;

FIG. 12C is a diagram illustrating an example of a generated wide beam;

FIG. 13 is a diagram illustrating an example of multi-wide beam generation;

FIG. 14 is a diagram illustrating an example of Proposal 3;

FIG. 15 is a diagram illustrating a first example of Use Case 1;

FIG. 16 is a diagram illustrating a second example of Use Case 1;

FIG. 17 is a diagram illustrating Alt. 1 of the second example of Use Case 1;

FIG. 18 is a diagram illustrating Alt. 2 of the second example of Use Case 1;

FIG. 19 is a diagram illustrating a first example of Use Case 2;

FIG. 20A is a diagram illustrating a first example of Use Case 3;

FIG. 20B is a diagram illustrating a second example of Use Case 3;

FIG. 21 is a block diagram illustrating an example of a configuration of a base station according to an embodiment of the present disclosure;

FIG. 22 is a block diagram illustrating an example of a configuration of a terminal according to the embodiment of the present disclosure;

FIG. 23 is a block diagram illustrating an example of a configuration of a radio apparatus according to the embodiment of the present disclosure;

FIG. 24 is a diagram illustrating an example of a hardware configuration of the base station, the terminal, and the radio apparatus according to the embodiment of the present disclosure; and

FIG. 25 is a diagram illustrating an exemplary configuration of a vehicle.

Description of Embodiments

Hereinafter, embodiments according to an aspect of the present disclosure will be described with reference to the accompanying drawings. Note that the embodiments described below are merely examples, and the embodiments to which the present disclosure is applied are not limited to the following embodiments.
Existing techniques are used as appropriate for operations of a radio communication system in an embodiment of the present disclosure. Note that the existing technology is, for example, existing LTE or existing NR, but is not limited to existing LTE or NR.

Terms used in existing LTE or NR, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. In addition, the above terms in NR correspond to NR-SS, NR-PSS, NR-SSS, NR-PBCH, NR-PRACH, and the like. Note that, even though the signal used in NR, it is not necessarily explicitly referred to as "NR-".

Further, in an embodiment of the present disclosure, the duplex method may be a time division duplex (TDD) method, a frequency division duplex (FDD) method, or another method (for example, a flexible duplex method).

Furthermore, in an embodiment of the present disclosure, the term "configured" with respect to a radio parameter or the like may refer to a predetermined value being preconfigured, or it may refer to a radio parameter indicated from a base station or a terminal being configured.

<Radio Communication System>

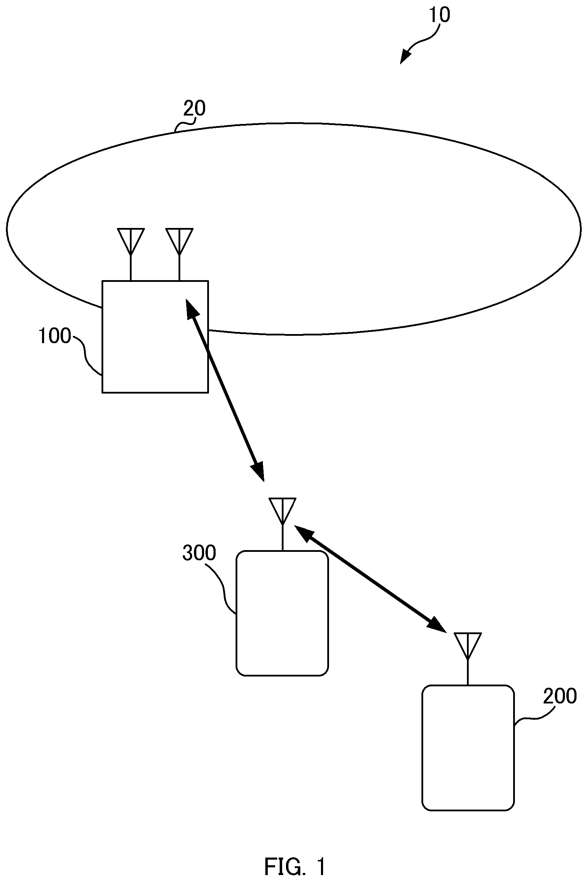

FIG. 1 is a diagram illustrating an example of radio communication system 10 according to an embodiment of the present disclosure. Radio communication system 10 is a radio communication system conforming to 5G NR or 6G NR, and includes next generation-radio access network 20 (hereinafter, referred to as NG-RAN 20) and terminal 200 (hereinafter, also referred to as user equipment (UE) 200).

Note that radio communication system 10 may be a radio communication system conforming to a system called Beyond 5G, 5G Evolution, or 6G.

NG-RAN 20 includes base station 100 (hereinafter also referred to as gNB 100). Note that the numbers of gNBs and UEs are not limited to the example illustrated in FIG. 1.

NG-RAN 20 actually includes a plurality of NG-RAN nodes, specifically gNBs (or ng-eNBs), and is connected to a core network conforming to 5G or 6G. Note that NG-RAN 20 and the core network may be simply referred to as a "network." Further, in the following, the gNB may be read as a network (NW).

gNB 100 is, for example, a base station conforming to 5G or 6G, and performs radio communication conforming to 5G or 6G with UE 200.

In addition, in the example illustrated in FIG. 1, radio apparatus 300 that forwards signals is illustrated between gNB 100 and UE 200. In the following, radio apparatus 300 may be referred to as a reconfigurable intelligent surface (RIS).

Radio apparatus 300 performs a forwarding operation of forwarding a signal transmitted from gNB 100 toward UE 200, for example. Radio apparatus 300 may also perform a forwarding operation of forwarding a signal transmitted from UE 200 toward gNB 100. The "forwarding (forward)" may be replaced with "relaying". Further, the "operation" may be replaced with "processing," "control," or the like. In addition, the RIS, which is an example of radio apparatus 300 being considered in NR, will be described later.

gNB 100 and UE 200 may controls radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication between UE and each of two NG-RAN nodes simultaneously, and the like.

Further, radio communication system 10 may support a plurality of frequency ranges (FRs). Radio communication system 10 may support FR1 and FR2. The frequency bands of respective FRs are as follows, for example.

- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) may be used, and a bandwidth (BW) of 50 to 400 MHz may be used.

Note that, the SCS may be interpreted as numerology. The numerology is defined in 3GPP TS 38.300 and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

The time direction (t) may be referred to as a time domain, a symbol period, a symbol time, or the like. Further, the frequency direction may be referred to as a frequency domain, a resource block, a subcarrier, a bandwidth part (BWP), or the like.

gNB 100 transmits control information, configuration information, and the like of gNB 100 to UE 200 as a downlink (DL) signal.

Further, for example, gNB 100 receives, as an uplink (UL) signal, control information, a data signal, information on the processing capability of UE 200 (terminal capability (information); for example, UE capability), and the like from UE 200.

Radio apparatus 300 performs a forwarding operation of forwarding a DL signal to UE 200. Radio apparatus 300 performs a forwarding operation of forwarding a UL signal to gNB 100. Note that, in the following, the UL signal received by gNB 100 from UE 200 and/or the DL signal received by UE 200 from gNB 100 may be a signal forwarded by radio apparatus 300.

UE 200 is a communication apparatus with a radio communication function, such as a smartphone, a mobile phone, a tablet, a wearable terminal, and a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on a reception result of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that the PDSCH is an example of a downlink shared channel, and the PDCCH is an example of a downlink control channel. Note that the PDCCH may be read as downlink control information (DCI), control information, or the like transmitted in the PDCCH.

The reference signal included in a DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a DL data signal and is transmitted using the PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that the PUSCH is an example of an uplink shared channel, and the PUCCH is an example of an uplink control channel. The shared channel may also be referred to as a data channel. Note that the PUSCH or the PUCCH may be read as uplink control information (UCI), control information, or the like transmitted in the PUSCH or the PUCCH.

The reference signal included in a UL signal may include, for example, at least one of the DMRS, the PTRS, the CSI-RS, the SRSRS, and the PRS for positional information. For example, the reference signal such as the DMRS and the PTRS is used for demodulating a UL data signal and is transmitted using the PUSCH.

<Use of Sub-Terahertz Waves>

In a future radio communication system (for example, 6G and thereafter), strict requirements are introduced with respect to capacity, coverage, power consumption, and other aspects. Studies have been conducted for realizing a data rate of 100 Gbps while maintaining sufficient coverage by using a band (spectrum) of sub-terahertz (for example, 100 GHz to 300 GHz) that is a higher frequency band than the existing systems (for example, NR Rel. 15/16/17).

In the studies, a transmission method of line of sight (LOS)-MIMO suitable for an access link is considered to be designed with 100 GHz, 100 Gbps, and (coverage of) 100 m as a target.

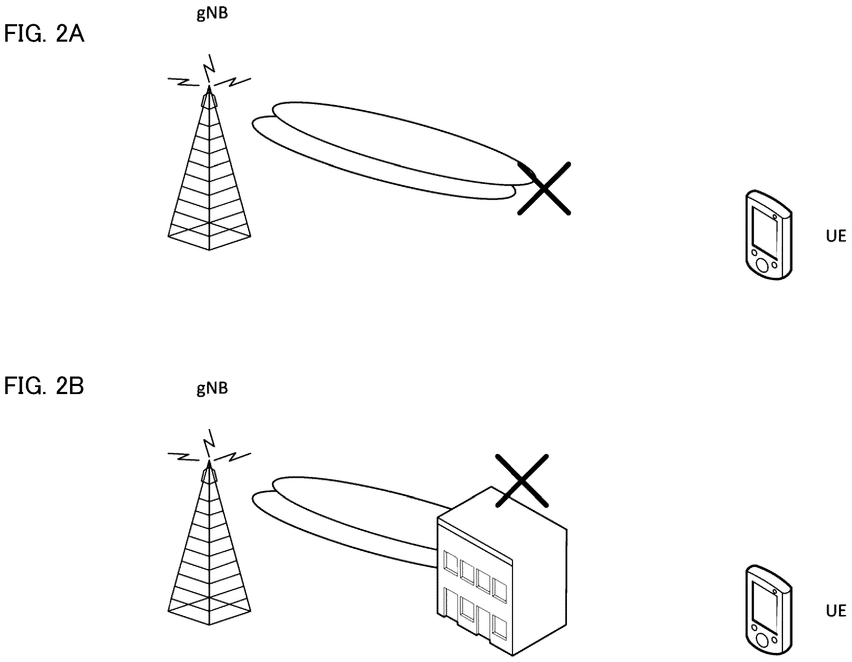

FIG. 2A is a diagram illustrating an example of a distant user in a high frequency band. In the example illustrated in FIG. 2A, orthonormal transmission cannot be performed because of a restriction on the size of a base station (BS) for mega MIMO for distant users.

FIG. 2B is a diagram illustrating an example of a non-line of sight (NLOS) user in a high frequency band. For NLOS users, efficient LOS-MIMO transmission cannot be performed due to blocking (for example, a building).

The LOS-MIMO is not supported in MIMO of the existing NR (NR MIMO). In the existing NR, a very large bandwidth is needed to achieve the data rate of 100 Gbps, and it is difficult to secure such a very large bandwidth.

The NR MIMO is designed for an antenna far-field that only supports transmission of rank 1 in each polarization direction in an LOS channel. Multiplexing of rank 2 is possible by using double polarization, but a rank higher than rank 2 cannot be used. In order to achieve 100 Gbps, a bandwidth of several tens of GHz is required, but this is difficult to achieve in a practical system and places a high requirement on an RF component.

A LOS-MIMO scheme that has already been considered is not suitable for the access link because transmission and reception positions need to be fixed, or because a required array size is too large.

Therefore, studies have been conducted on introduction of a fixed large-interval antenna array, an orbital angular momentum (OAM)-MIMO, a mega MIMO utilizing a reconfigurable intelligent surface (RIS) (RIS-aided Mega MIMO), and the like.

The RIS has attracted attention as a new apparatus for network deployment by its flexible and cost-efficient approach, not limited to the example of the sub-terahertz waves described above. The RIS is being considered as a promising technology for achieving a very high data rate and a wide coverage extension in the topology of a 6G radio network. For example, in Release 19 (Rel. 19), discussion on the RIS is being advanced.

<Reconfigurable Intelligent Surface (RIS)>

The RIS relays communication between BS and UE by controlling a reflection angle of at least one of the reflection from a backhaul link toward an access link and the reflection from the access link toward the backhaul link. The RIS is an example of a radio apparatus for performing network deployment in a flexible and cost-efficient approach as compared with a new type of network (NW) node, such as an integrated access and backhaul (IAB), an RF repeater, and a network-controlled repeater (NCR).

The RIS may be configured by a plurality of reconfigurable scattering components. In the following, the scattering component is sometimes referred to as an element or an antenna element.

The RIS may control the direction of a reflected signal, or may control the direction of a transmitted (refracted) signal.

Note that, in the present disclosure, reflection, transmission, and refraction may be replaced with each other. Further, in the present disclosure, reflection, transmission, and refraction of a signal in the RIS may be regarded as the RIS receiving the signal transmitted from a specific direction and transmitting the signal in the same direction as the specific direction, or in a direction different from the specific direction. In this case, the signal transmitted by the RIS may be the same signal as the signal received by the RIS, or may be a signal that has been received by the RIS and has undergone specific processing. In addition, the forwarding processing in the RIS in the present disclosure may be regarded as processing in which at least one of reflection, transmission, and refraction occurs in the RIS.

While the NCR amplifies a signal to be relayed, the RIS may not require an RF amplifier. This reduces the power consumption.

The RIS can obtain a beam gain by a narrow beam, but requires an increased number of RIS beams (beams reflected/refracted by the RIS).

The RIS may reflect/refract a signal other than a target frequency.

A material such as a liquid crystal, a metal, and a semiconductor may be used for the RIS. For example, the RIS using the liquid crystal is considered to be unsuitable for the current beam sweep operation due to the beam sweep speed slower than that of the RIS using the semiconductor.

The RIS may be installed on an object, such as a building, considering its thin and flexible shape.

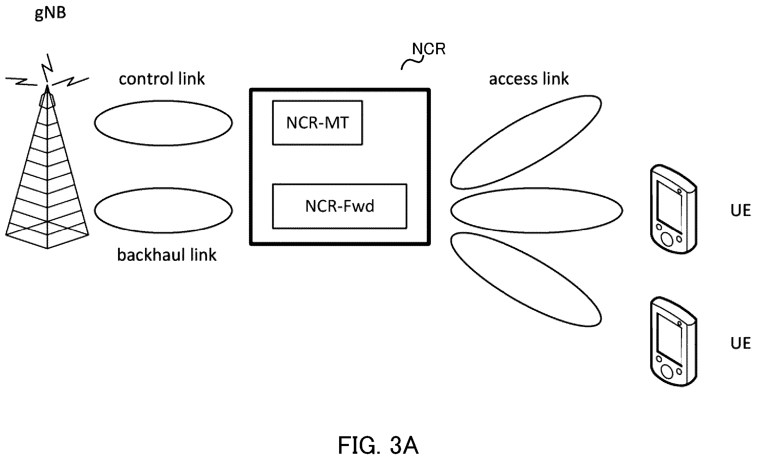

FIG. 3A is a diagram illustrating an example of communication using a configuration of an NCR. The NCR may include an NCR-mobile termination (MT) and an NCR-forwarding (Fwd). The NCR-MT communicates with a BS (gNB) via a control link.

The communication between the NCR-MT and the BS may include at least one of receiving configuration/instruction/control information from the BS and transmitting a request/report/response to the BS. The NCR-Fwd relays communication between the BS and UE by relaying/amplifying a signal from a backhaul link to an access link and relaying/amplifying a signal from the access link to the backhaul link.

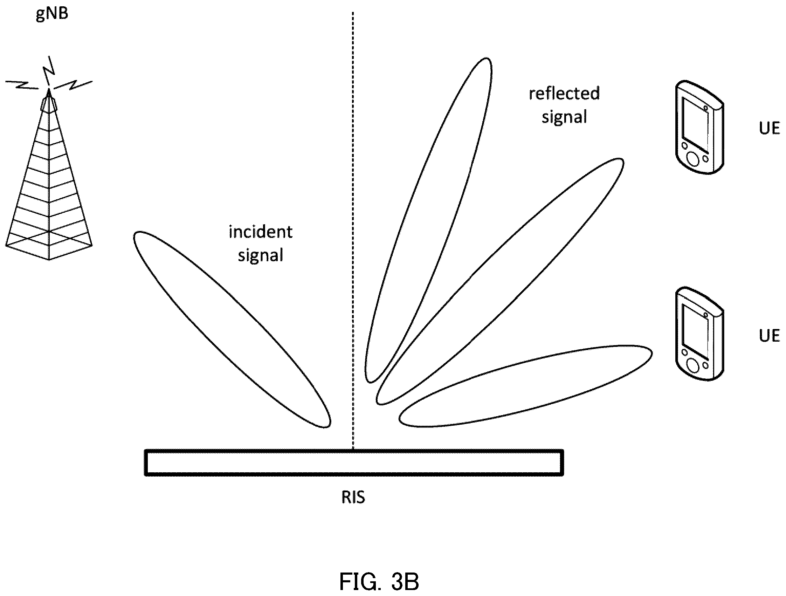

FIG. 3B is a diagram illustrating an example of communication using the RIS. The RIS relays communication between the BS and the UE by controlling a reflection angle of at least one of the reflection from a backhaul link toward an access link and the reflection from the access link toward the backhaul link.

<System Architecture Including RIS>

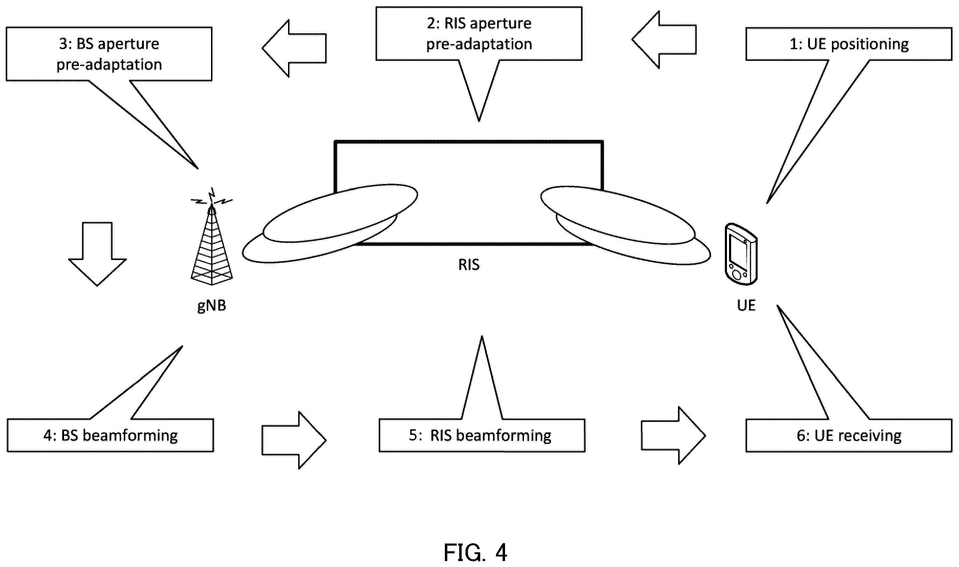

FIG. 4 is a diagram illustrating an example of a system architecture including the RIS. Hereinafter, the system architecture including the RIS will be described with reference to FIG. 4, but this is merely an example.

The system architecture including the RIS may include a plurality of (for example, two) design phases.

For example, the system architecture including the RIS may include an aperture pre-adaptation phase.

In the aperture pre-adaptation phase, positioning of UE may be performed first. In the positioning of the UE, the UE may report information on the position/attitude of the UE to a network (NW). In addition, in the positioning of the UE, the NW (base station) may estimate the information on the position/attitude of the UE based on a signal (for example, a UL RS) transmitted from the UE.

Note that the positioning of the UE in the aperture pre-adaptation phase may be omitted.

Next, in the aperture pre-adaptation phase, aperture (for example, an antenna element) pre-adaptation of the RIS may be performed.

In the present disclosure, the aperture adaptation may mean deciding/determining/selecting an antenna element/array to be used.

Next, in the aperture pre-adaptation phase, aperture (for example, an antenna element) pre-adaptation of the BS may be performed.

Further, the system architecture including the RIS may include a beamforming phase.

The beamforming phase may follow the aperture pre-adaptation phase, for example.

In the beamforming phase, beamforming in the BS may be performed first.

Next, in the beamforming phase, beamforming in the RIS may be performed.

Then, in the beamforming phase, the UE may perform receiving. The UE may use a MIMO receiver based on CSI reception (CSIR).

Note that the receiving by the UE in the beamforming phase may be omitted.

<Beamforming Methods for Far Field and Near Field>

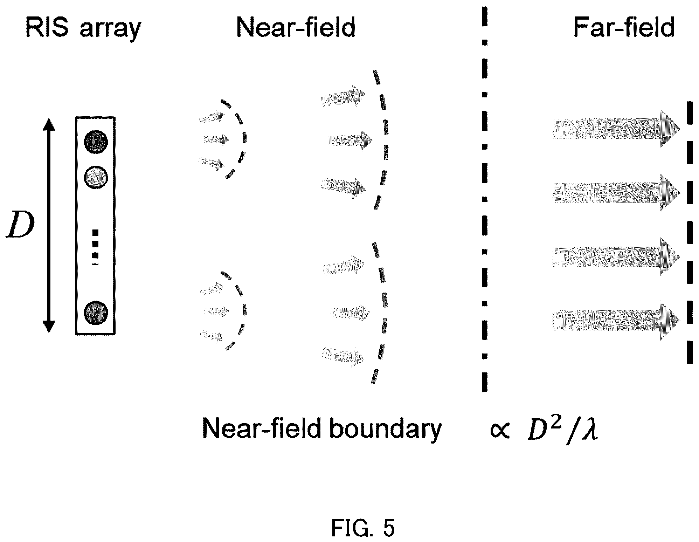

FIG. 5 is a diagram illustrating an example of a near field (NF) and a far field (FF) of the RIS. FIG. 5 illustrates an RIS array, a state of wave propagation in the near field of the RIS array, and a state of wave propagation in the far field of the RIS array. Note that the RIS array may be regarded as an example of a surface that transmits a signal or radiates a wave in the RIS. In addition, the near field may be replaced with a short distance. Further, the far field may be replaced with a long distance.

A large aperture of the RIS indicates a specific characteristic of expanding a range of the near field. For example, as illustrated in FIG. 5, the boundary of the near field (for example, the boundary between the near field and the far field) is proportional to the square of D that indicates the size related to the aperture of the RIS, and thus the large aperture of the RIS expands the range of the near field. In addition, the boundary of the near field is inversely proportional to the wavelength $\lambda$, and thus the shorter the wavelength, that is, the higher the frequency, the larger the range of the near field. In the region of the near field, the phase delay for various elements of the RIS can be distinguished. As a result, the assumption of a plane wavefront is not useful, and it is necessary to consider a spherical wavefront. As illustrated in FIG. 5, in the region of the far field, a wavefront of a wave radiated from each element of the RIS is assumed to be a plane, but in the region of the near field, a wavefront of a wave generated from each element is a sphere.

A plurality of methods is being considered as a beamforming method for the existing far-field (FF) and near-field (NF).

For example, the beamforming methods may include a DFT-based beamforming (BF), a beamfocusing with an optimum phase, and a beamfocusing with a steering vector of a near field (NF).

The DFT-based BF may be mainly used for transmitting a signal to a distant terminal. The DFT-based BF may use a precoder (matrix) based on an angle-dependent linear phase.

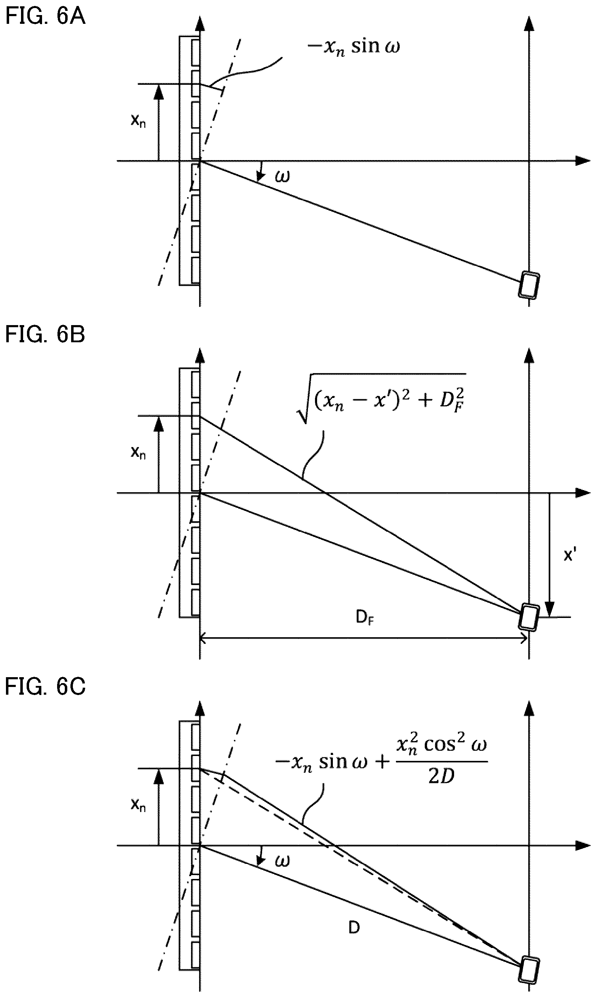

FIG. 6A is a diagram illustrating an example of the DFT-based beamforming (BF). Note that FIG. 6A illustrates an example of a uniform and linear array. In this example, xn is a distance from the array center to element n in the array and is an angle of a beam with respect to an axis perpendicular to the array.

The beamfocusing with the optimum phase may be mainly used for transmitting a signal to a close terminal. The beamfocusing with the optimum phase may use a precoder (matrix) based on a position (distance)-dependent non-linear phase.

FIG. 6B is a diagram illustrating an example of the beamfocusing with the optimum phase. Note that FIG. 6B illustrates an example of a uniform and linear array. In this example, DF is a focal distance, and x' is a distance from an axis perpendicular to the array to the focus.

The beamfocusing with the steering vector of the near field may be mainly used for transmitting a signal to a close terminal. The beamfocusing with the steering vector of the near field may use a precoder (matrix) based on an angle- & position (distance)-dependent quadratic phase.

FIG. 6C is a diagram illustrating an example of the beamfocusing with the steering vector of the near field (NF). Note that FIG. 6C illustrates an example of a uniform and linear array. In this example, D is a distance from the center of the array to the focus, and $\omega$ is an angle from an axis perpendicular to the array to a straight line connecting the center of the array and the focus.

A conventional codebook for beamforming in the far field, such as a DFT codebook, cannot be directly applied to the near field because the conventional codebook is not suited to a channel in the near field. If the DFT codebook is applied to the beamforming in the near field, that may cause a significant loss of the SNR. In contrast, focused beamforming such as a ring-type codebook (RTC), which is a form in the near field of a coherent beamformer, does not have a restriction such as not being applicable to the near field.

For example, the RIS is adopted for data channel forwarding, and the above-described RTC generates a UE-specific focused beam to enable high-speed transmission.

Meanwhile, it is considered to use the RIS for forwarding a control channel (for example, a synchronization signal block (SSB)).

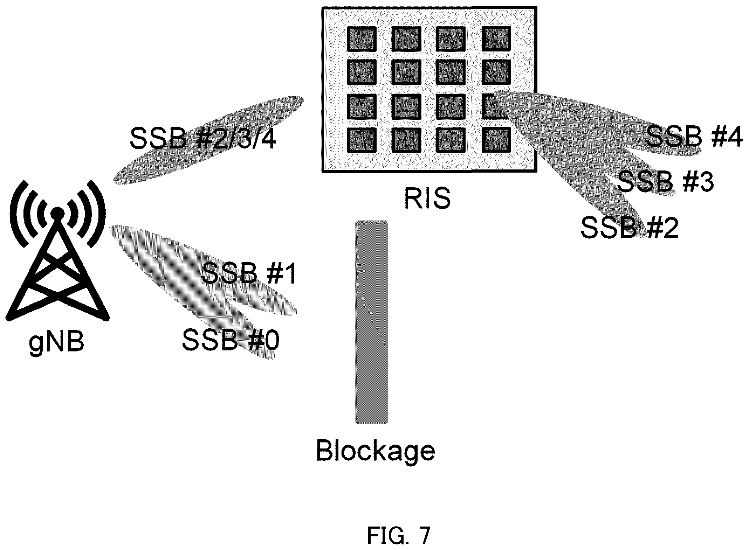

FIG. 7 is a diagram illustrating an example of SSB forwarding with the RIS applied. FIG. 7 illustrates the RIS forwarding the SSBs #2 to #4 among the SSBs #0 to #4 transmitted by the gNB.

In a case where the RIS forwards a control channel (for example, the SSB), it is considered to expand a beam for the forwarding.

Here, an existing SSB forwarding method by the RIS and an existing beam expansion technology of the RIS will be described.

<Existing Method>

Hereinafter, the existing SSB forwarding method by the RIS will be described. In the existing method, the RIS forwards an SSB transmitted by the gNB by using a large number of narrow beams. Therefore, in the existing method, a significant allocation of SSB resources is needed, or a significant change to the SSB scheme is needed.

Existing typical beam expansion technologies are classified into a technology based on a numerical optimization algorithm, a technology based on adjustment of an aperture, a technology based on logical subarray division, and an approach of wide-area illumination.

For example, in the technology based on a numerical optimization algorithm, the processing is complicated due to the complex algorithm. Therefore, it is difficult to achieve beamforming in a realistic time.

In addition, for example, in the approach of wide-area illumination, it is difficult to accurately control the shaping of the pattern of a wide beam of the RIS according to a requirement of an actual coverage.

In addition, for example, in the technology based on adjustment of an aperture, the beamforming gain of the array is reduced due to the adjustment of the aperture.

In addition, for example, in the technology based on logical subarray division, the beamforming gain of the entire area varies significantly.

Here, an example of related art regarding the RIS including the adjustment of the aperture and the logical subarray division will be described.

<First Example of Related Art>

The first example relates to a codebook/precoder design.

The codebook/precoder may be a codebook/precoder for the near filed (NF) or may be a codebook/precoder for the far field (FF).

In the present disclosure, the near field may mean a distance shorter than (or equal to) a specific threshold. In the present disclosure, the far field may mean a distance longer than (or equal to) a specific threshold.

The RIS (RIS-NCR) may receive information for the precoder/codebook from a NW. The information may be, for example, information regarding a position of another node (for example, a UE/NW node). The information regarding the position may be, for example, at least one of information regarding the angle and information regarding the distance.

The first example is roughly divided into Examples 1-1 and 1-2. Example 1-1 or Example 1-2 may be applied, or Example 1-1 and Example 1-2 may be combined and applied.

<Example 1-1>

Example 1-1 relates to a specific design of the codebook/precoder.

Example 1-1 is roughly divided into Examples 1-1-1 to 1-1-4. Any one of Examples 1-1-1 to 1-1-4 may be applied, or at least two of Examples 1-1-1 to 1-1-4 may be combined and applied.

The precoder may be calculated as an output of specific multiplication for a plurality of different precoders/matrices, for example.

In the present disclosure, the codebook, the precoder, the codeword, the matrix, the term, the vector, and the element may be replaced with each other.

<Example 1-1-1>

The precoder in the RIS may be a precoder that decouples an angle-dependent term and a distance (position)-dependent term.

Example 1-1-1 may be used, for example, for beamforming/focusing of the NCR (RIS-NCR) including the RIS.

The precoder in the RIS may be calculated as, for example, a product of a distance-dependent precoder/matrix (for example, WRing) and an angle-dependent precoder/matrix (for example, WDFT) (for example, a Hadamard product (element-wise product)).

For example, the precoder may be calculated by the following Equation 1.

[1]

$$W = W_{Ring} \circ W_{DFT}$$

$$= \left[ \exp\left( j\frac{2\pi\sqrt{x_0^2 + D_F^2}}{\lambda} \right) \quad \exp\left( j\frac{2\pi k}{ON} + j\frac{2\pi\sqrt{x_1^2 + D_F^2}}{\lambda} \right) \quad \cdots \right.$$

$$\left. \exp\left( j\frac{2\pi(N-1)k}{ON} + j\frac{2\pi\sqrt{x_{N-1}^2 + D_F^2}}{\lambda} \right) \right]$$

$$\cdots \text{ (Equation 1)}$$

Here, $D_F$ may be an axial distance between the array and the focal position.

Note that, in the present disclosure, the phase shift related to the distance-dependent precoder may be referred to as a ring-type phase distribution. In addition, in the present disclosure, the codebook related to the distance-dependent precoder may be referred to as a ring-type codebook (RTC).

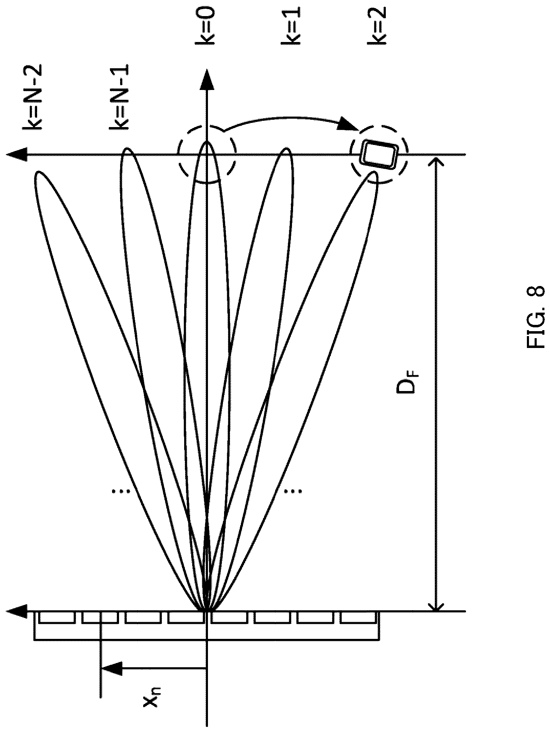

FIG. 8 is a diagram illustrating an example of the precoder according to Example 1-1-1. FIG. 8 illustrates an example of a uniform and linear array. In the example illustrated in FIG. 8, the beamfocusing at boresight is performed first. The distance-dependent precoder described above may be used for the beamfocusing. k is an index corresponding to a phase in the DFT.

In the example illustrated in FIG. 8, shifting of the focal position by the DFT vector is performed next. The angle-dependent precoder described above may be used for the shifting.

According to Example 1-1-1, using the angle-dependent term and the distance (position)-dependent term enables appropriate signal transmission to the target in the far field and the near field and allows for simple implementation.

<Example 1-1-2>

The precoder in the RIS may be a precoder for which a piecewise linear approximation with DFT vectors is used.

For example, the precoder may be a precoder including a term for each of the subarrays (one or more arrays) and a distance (position)-dependent term.

Example 1-1-2 may be used for at least one of beamforming/focusing of the NCR (RIS-NCR) including the RIS and coherent transmission of a plurality of panels (for example, panels disposed at wide intervals).

In addition, Example 1-1-2 is suitable for the RIS-NCR based on the subarray.

The precoder in the RIS may be calculated as, for example, a product of a precoder for each of the subarrays (one or more arrays) and an angle-dependent precoder (for example, a Hadamard product (element-wise product)).

The precoder for each of the subarrays (one or more arrays) may be represented by, for example, a product of a phase offset for each of the subarrays and an angle offset of the subarrays.

For example, the precoder may be calculated by the following Equation 2.

$$W^{(i,j)} = \varphi_{PO}^{(i,j)} W_{AO}^{(i,j)} \circ W_{DFT} \qquad \cdots \text{ (Equation 2)}$$

Here, $\varphi^{(i,j)}_{PO}$ may indicate a phase offset of the subarray (i,j). The phase offset of the subarray (i,j) may be quantized in a specific bit (for example, b-bit) that can take a specific value (for example, a value from 0 to $2\pi$). In addition, $W^{(i,j)}_{AO}$ may indicate an angle offset of the subarray (i,j).

The $W^{(i,j)}_{AO}$ may be calculated based on the inner product of the vector from the reference point of the array to the reference point of the subarray (i,j) and the vector from the reference point of the subarray (i,j) to the antenna element (m,n) in the subarray (i,j).

For example, $W^{(i,j)}_{AO}$ may be calculated by the following Equation 3.

$$\left[W_{AO}^{(i,j)}\right]_{(m.n)} = \exp\left(j\,\frac{2\pi}{\lambda D}\,\vec{r}_{SA}^{(i,j)} \cdot \vec{r}_{AE}^{(m,n)}\right) \qquad \text{... (Equation 3)}$$

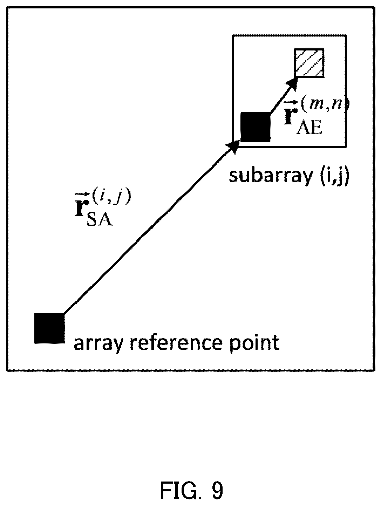

Here, D may be a distance from the array (for example, a reference point of the array) to the target (for example, the UE). In addition, $r^{(i,j)}_{SA}$ may indicate a vector from the reference point of the array to the reference point of the subarray (i,j), and $r^{(m,n)}_{AE}$ may indicate a vector from the reference point of the subarray (i,j) to the antenna element (m,n) in the subarray (i,j) (see FIG. 9).

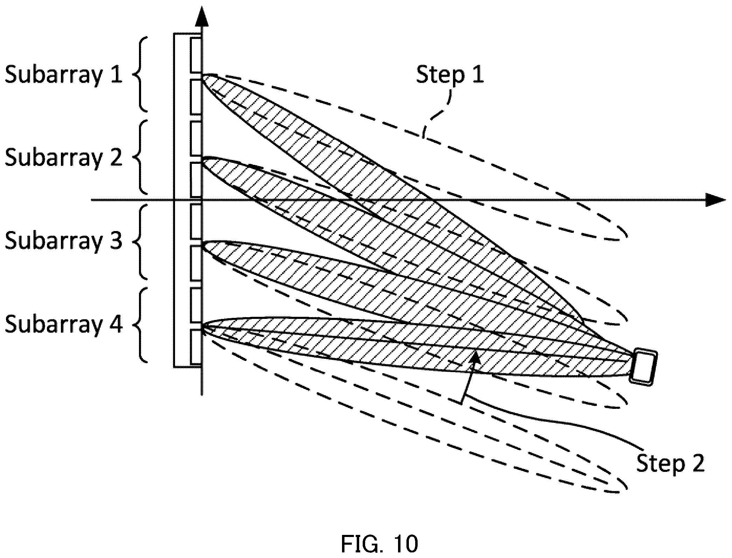

FIG. 10 is a diagram illustrating an example of the precoder according to Example 1-1-2. FIG. 10 illustrates an example of a uniform and linear array. In the example illustrated in FIG. 8, first, the focusing of the beam direction by the phase offset is performed for a plurality of arrays (each of subarrays) (Step 1). The above-described precoder based on the phase offset and the angle offset may be used for the beamfocusing.

In the example illustrated in FIG. 10, next, the shifting of the focal position by the DFT vector is performed (Step 2). The angle-dependent precoder described above may be used for the shifting.

According to Example 1-1-2, using the term for each of the subarrays (one or more arrays) and the distance (position)-dependent term enables appropriate signal transmission to the target in the far field and the near field.

<Example 1-1-3>

The precoder in the RIS may be a precoder for which a term related to the near field and a term related to the far filed are used.

Example 1-1-3 may be used, for example, for acquiring the CSI in either the FF or the NF or both the FF and the NF (not limited to the FF and the NF), or may be used for the localization/sensing of the NF.

The precoder in the RIS may be calculated as, for example, a product of a first precoder and a second precoder (for example, a Kronecker product (element-wise product)). The first/second precoder may include a term corresponding to the far field (or angle dependency) and a term corresponding to the near field (or distance dependency).

The precoder in the present example may be applied to a uniform planar array.

For example, the precoder W may be represented by the following Equation 4.

$$W = W_{N_1,O_1,k_1,D,L_1} \otimes W_{N_2,O_2,k_2,D,L_2} \qquad \text{... (Equation 4)}$$

Here, W is represented by a Kronecker product of first precoder $W_{N\_1, O\_1, k\_1, D, L\_1}$ and second precoder $W_{N\_2, O\_2, k\_2, D, L\_2}$. Note that "N_1" represents "$N_1$". Other notations other than "N_1" may be represented in the same manner as "N_1".

$W_{N\_i, O\_i, k\_i, D, L\_i}$ may be represented by, for example, the following Equation 5.

$$\left[W_{N_i,O_i,k_i,D,L_i}\right]_n = \exp\left(2\pi j\,\frac{nk_i}{O_iN_i} + \pi j\,\frac{(n^2 - nN_{RP})(L_i^2 - k_i'^2)}{O_i^2 N_i^2 D}\right)$$

$$n = 0,1,\dots,O_iN_i - 1$$

$$k_i = 0,1,\dots,O_iN_i - 1$$

$$k'_i = \begin{cases} k_i & \text{if } k_i \le O_iN_i/2 \\ O_iN_i - k_i & \text{otherwise} \end{cases}$$

$$i = 1,2 \qquad \text{... (Equation 5)}$$

Here, number $N_i$ of antenna elements (scattering elements) in the i-th axial direction and oversampling number $O_i$ in the i-th axial direction in the RIS array may be the same as the NR DFT-based codebook specified in the existing NR. i = 1 may correspond to an x-axis direction (horizontal direction). i = 2 may correspond to a z-axis direction (vertical direction). In addition, $k_i$ is a codeword index, and k' may represent a second-order term.

In addition, $N_{RP}$ may be a value depending on the reference point of the RIS array. For example, $N_{RP}$ may be calculated by $N_{RP} = 2(d_{RP} - d_0)/\Delta d$.

For example, $d_{RP} - d_0$ may indicate a distance between a specific antenna element (for example, antenna element #0) and a reference point, and $\Delta d$ may indicate an antenna element spacing.

For example, in a case where the bottom left element of the array is used as the reference point, $N_{RP}$ may be 0.

For example, in a case where the center coordinate of the array is used as the reference point, $N_{RP}$ may be calculated by $N_i - 1$.

D may indicate a normalized distance between the reference point and the focal distance. For example, D may be calculated by (focal length)$/\lambda$.

L may be a value related to a normalized equivalent aperture. L may be calculated by, for example, $ON \cdot \Delta d/\lambda$.

<Example 1-1-4>

The precoder in the RIS may be a precoder for which a precoder related to an access link (between the UE and the RIS) and a precoder related to a backhaul link (between the BS and the RIS) are used.

For example, the precoder may be a precoder including a term for each of the subarrays (one or more arrays) and a distance (position)-dependent term.

Example 1-1-4 may be used for at least one of beamforming/focusing of the NCR (RIS-NCR) including the RIS in the backhaul link/access link and the cascaded LoS-MIMO (for example, the LoS-MIMO requiring a joint focal points indication).

The precoder in the RIS may be calculated as, for example, a product of a precoder related to the access link and a precoder related to the backhaul link (for example, a Hadamard product (element-wise product)).

For example, the precoder may be calculated by the following Equation 6.

$$W = W_{AC} \circ W_{BH} \qquad \dots \text{(Equation 6)}$$

Here, $W_{AC}$ may indicate a precoder of a beam in an access link of the RIS-NCR (an access beam, a beam toward the UE). In addition, $W_{BH}$ may indicate a precoder of a beam in a backhaul link of the RIS-NCR (a backhaul beam, a beam toward the BS).

At least one of $W_{AC}$ and $W_{BH}$ may be a precoder calculated by, for example, at least one of the methods described in Examples 1-1-1 to 1-1-3.

The focal distances of $W_{AC}$ and $W_{BH}$ may be selected/determined independently, or may be selected/determined at the same time (jointly). For example, the focal distances of $W_{AC}$ and $W_{BH}$ may be selected/determined in a conjugate symmetric manner.

According to Example 1-1-4, the precoder/codebook can be appropriately designed in the backhaul link as well as in the access link.

<Parameters Related to Codebook/Precoder>

In the following, the parameters in each of the equations in Example 1-1 will be described.

L may be a parameter related to the aperture (for example, the antenna element). L may be reported as the capability of the RIS-NCR (NCR-MT).

L may be reported by the RIS as the antenna number (the number of antennas)/interval in n dimensions (for example, n is 2).

L may be reported by the RIS as the length of a side of the RIS (for example, the antenna number $\times$ the antenna interval).

$N_i$, $O_i$, $k_i$, $k_{ip}$, and $D_i$ (i = 1 or 2) may be parameters related to the codebook for the access link/backhaul link.

$N_i$ and $O_i$ may be related to the codebook of the RIS. The codebook of the RIS may be configured in advance for the RIS or may be defined in advance in the specification.

$N_i$ and $O_i$ may be determined based on a report on the capability of the RIS or may be determined regardless of the dimension of the RIS.

$k_i$ may be related to the codebook of the RIS. The codebook of the RIS may be indicated to the RIS.

$k_{ip}$ may be calculated in the RIS based on a specific configuration/indication for the RIS.

$D_i$ (for example, i = 1) may be a parameter related to a distance between the BS and the RIS. $D_i$ (for example, i = 2) may be a parameter related to a distance between the UE and the RIS.

For example, $D_1$ may be set in advance by the BS to the RIS, and $D_2$ may be indicated by the BS to the RIS.

For example, $D_1$ and $D_2$ may be indicated by the BS (using a single compound CW).

For example, $D_1$ may be set in advance by the BS to the RIS, and $D_2$ may be measured by the RIS.

For example, $D_1$ and $D_2$ may be measured by the RIS.

For example, logarithmic quantization may be used for determination of $D_1$ and $D_2$.

$N_{RP}$ may be a parameter related to the reference point of the RIS. $N_{RP}$ may be, for example, a parameter related to an offset of the reference point of the RIS.

$N_{RP}$ may be related to the codebook of the RIS. The codebook of the RIS may be indicated to the RIS.

The reference point of the RIS may mean a specific position.

For example, the reference point of the RIS may be a position of an antenna/subarray at a specific position (for example, the bottom left).

For example, the reference point of the RIS may be a position of the center point of the RIS. In this case, a single large RIS or a plurality of separated subarrays is suitable.

For example, the reference point of the RIS may be reported by the RIS. The reference point of the RIS may be determined in accordance with the reference point reported by the RIS.

A parameter indicating an adaptation (aperture adaptation) mode may be defined. The parameter may be used for aperture control of the RIS.

The parameter indicating the adaptation mode may be related to the codebook of the RIS. The codebook of the RIS may be indicated to the RIS.

A parameter indicating the shape/size of the RIS may be defined. The parameter may be used for aperture control of the RIS.

The parameter indicating the shape/size of the RIS may be related to the codebook of the RIS. The codebook of the RIS may be indicated to the RIS.

The parameter may be indicated by a bitmap. In addition, the parameter may be indicated by the directions and the lengths of two sides of the aperture that form a parallelogram. In addition, the parameter may be indicated by the arrangement of the subarray (for example, the direction, the interval, the subarray number, and/or the size of the subarray). In addition, the parameter may be indicated by at least one of the directions/lengths of two sides of the aperture that form a parallelogram (may be referred to as a general mode), the subarray number (sampling rate), and the subarray size.

A parameter indicating a roll-off factor may be defined.

A parameter related to the conjugate symmetric RTC may be defined. The parameter may be a parameter related to the reference point related to the position of the UE.

The reference point related to the position of the UE may mean, for example, a specific antenna port of the UE (for example, antenna port #0).

The reference point related to the position of the UE may mean, for example, a specific (for example, the center) UE array configured by the BS.

<Example 1-2>

In Example 1-2, the quantization for the angle (angle information) and the distance (distance information) in an indication of a codebook (to the NW/RIS-NCR) will be described.

Example 1-2 is roughly divided into Examples 1-2-1 and 1-2-2. Any one of Examples 1-2-1 and 1-2-2 below may be applied, or Examples 1-2-1 and 1-2-2 below may be combined and applied.

The NW (or the RIS-NCR) may transmit, to the RIS-NCR (or the NW), the angle information/distance information on a codebook/precoder quantized using at least one of Examples 1-2-1 and 1-2-2.

<Example 1-2-1>

The quantization related to the angle and the quantization related to the distance may be performed separately (independently).

A specific quantization method may be used for the angle. The specific quantization method may be, for example, a DFT-based quantization method. Using the DFT-based approach for the quantization of the angle enables the quantization suitable for a unified design for the FF and the NF.

For example, linear quantization may be used for the distance. Using the linear quantization makes the implementation in the apparatus easy. For example, logarithmic quantization may be used for the distance. Using the logarithmic quantization enables appropriate quantization regardless of whether the distance between apparatuses is a long distance or a short distance.

The quantization for the distance may be performed using the following Equation 7.

$$D_n \leftarrow b^n \cdot d_0, \quad n = 0,1,2,\dots \qquad \dots \text{(Equation 7)}$$

In the present disclosure, the range of the NF may be related to the array area. For example, the range of the NF may be (almost) proportional to the array area.

<Example 1-2-2>

The quantization related to the angle and the quantization related to the distance may be performed jointly.

For example, the quantization related to the angle and the distance may be performed using a uniform grid in Cartesian coordinates (the angle and the distance may be quantized on the uniform grid). In this case, it can be suitably used for beamfocusing based on the localization/position.

For example, the quantization related to the angle and the distance may be performed using a non-uniform grid in spherical coordinates (the angle and the distance may be quantized on the non-uniform grid). In this case, it is suitable from the viewpoint of the aperture/NF range at boresight, and using a wider beam in a short distance achieves more uniform coverage and a reduction in the number of beams.

For example, the quantization related to the angle and the distance may be performed using the following Equation 8.

$$D_n \leftarrow b^n \cdot d_0 \cos^2 \omega, \quad n = 0,1,2,\ldots \qquad \ldots \text{(Equation 8)}$$

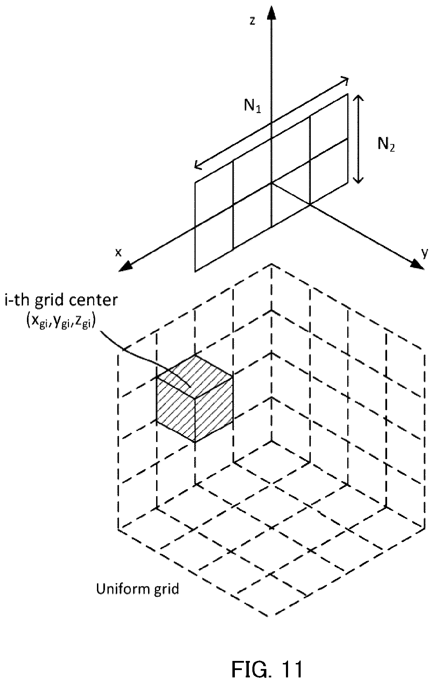

FIG. 11 is a diagram illustrating an example of a uniform grid in Cartesian coordinates. In the example illustrated in FIG. 11, a uniform grid in the Cartesian coordinates for the RIS (RIS-NCR) is illustrated.

In FIG. 11, $(x_{gi}, y_{gi}, z_{gi})$ may indicate the center coordinate of the i-th grid obtained from grid index i.

The uniform grid RTC using a uniform grid may be calculated by at least any one of the following Options 1 and 2.

The RTC using a uniform grid may be calculated by using the following Equation 9 (Option 1).

$$w = \exp\left(-j2\pi D_{gi}\right)$$

$$D_{gi}(n_1, n_2) = \sqrt{\left(x_{gi} - \left(n_1 - \frac{N_1}{2}\right)\frac{\lambda}{2}\right)^2 + \left(y_{gi}\right)^2 + \left(z_{gi} - \left(n_2 - \frac{N_2}{2}\right)\frac{\lambda}{2}\right)^2} \qquad \ldots \text{(Equation 9)}$$

The RTC using a uniform grid may be calculated by using the following Equation 10 (Option 2).

$$W = \left(W_{N_1,\theta} \otimes W_{N_2,\theta}\right) \circ W_D$$

$$\left[W_{N_1,\theta}\right]_{n_1} = \exp\left(-j\pi\theta n_1\right)$$

$$\left[W_{N_2,\varphi}\right]_{n_2} = \exp\left(-j\pi\varphi n_2\right)$$

$$\left[W_D\right]_{(n_1,n_2)} = \left(x_{gi} - \left(n_1 - \frac{N_1}{2}\right)\frac{\lambda}{2}\right)^2 + \left(y_{gi}\right)^2 + \left(z_{gi} - \left(n_2 - \frac{N_2}{2}\right)\frac{\lambda}{2}\right)^2$$

$$n_1 = 0,1,\ldots,N_1 - 1$$

$$n_2 = 0,1,\ldots,N_2 - 1 \qquad \ldots \text{(Equation 10)}$$

Here, the above $\theta$ may be calculated using the following Equation 11.

$$\theta = \sin \mu \cos \nu, \quad \varphi = \sin \nu \qquad \ldots \text{(Equation 11)}$$

Here, $\mu$ may represent an azimuth angle, and $\nu$ may represent an elevation angle. $\mu$ and the $\nu$ may be obtained by a specific coordinate conversion.

According to Example 1-2, the quantization for the angle (angle information) and the distance (distance information) in an indication of a codebook can be appropriately performed.

<Second Example of Related Art>

The second example relates to the adaptation of the aperture in the RIS.

The second example is roughly divided into Examples 2-1 and 2-2. Any one of Examples 2-1 and 2-2 below may be applied, or Examples 2-1 and 2-2 below may be combined and applied.

The RIS-NCR may receive information (configuration information) on the control of the aperture (for example, the antenna element) from the NW. The RIS-NCR may determine the aperture/antenna element to be used for a signal for a terminal based on the information.

<Example 2-1>

The RIS (RIS-NCR) may select/decide/determine the aperture to be used from among the apertures included in the RIS.

Example 2-1 is roughly divided into Examples 2-1-1 and 2-1-2. Any one of Examples 2-1-1 and 2-1-2 below may be applied, or Examples 2-1-1 and 2-1-2 below may be combined and applied.

<Example 2-1-1>

An unnecessary element (for example, an antenna element) of the RIS may be configured to be off. Information related to the configuration may be included in information related to the control of the aperture received from the NW.

An unnecessary element of the RIS may be configured not to scatter (or reflect/refract) an incident signal. In addition, an unnecessary element of the RIS may be configured to diffuse or randomly scatter (or reflect/refract) an incident signal.

<Example 2-1-2>

Beamforming and the aperture adaptation may be used in combination.

Information on the beamforming may include, for example, information on a beamforming vector of the RIS.

For example, the (desired, actually used) aperture may be represented by a value (for example, an aperture function) indicating the on/off state of each RIS element. In addition, the (desired, actually used) aperture may be applied to a beamforming vector of the RIS.

For example, in a case where a value (for example, an aperture function) corresponding to an RIS element is a first value (for example, 0), the RIS element may be in an off state. In addition, for example, in a case where a value (for example, an aperture function) corresponding to an RIS element is a second value (for example, 1), the RIS element may be in an on state.

The aperture adaptation may also be used to control a beam shape (for example, at least one of a beam width, a side lobe, a main lobe, and a shape/size of a focus).

<Example 2-2>

In Example 2-2, the control of the aperture in the RIS (RIS-NCR) will be described.

Example 2-2 is roughly divided into Examples 2-2-1 and 2-2-2. Any one of Examples 2-2-1 and 2-2-2 described below may be applied, or Examples 2-2-1 and 2-2-2 described below may be combined and applied.

<Example 2-2-1>

A mode related to the aperture of the RIS-NCR may be defined.

The RIS-NCR may determine the aperture to be used based on the mode. The mode may include, for example, a first mode to a third mode.

The first mode may be a mode in which a part or all of the elements of the RIS are used in a square shape. The first mode may be referred to as, for example, a fallback mode.

The second mode may be, for example, a mode in which a part of the elements of the RIS is used in a parallelogram (rhombus) shape. The second mode may be referred to as, for example, a semi-continuous mode.

The third mode may be a mode in which only a specific RIS is used among the elements of the RIS. The specific RIS may be determined from a part of the elements of the RIS selected in a parallelogram (rhombus) shape. The third mode may be referred to as, for example, a discrete mode.

<Example 2-2-2>

The shape/size of the aperture of the RIS-NCR to be used may be indicated by a specific method. Information related to the indication may be included in information related to the control of the aperture received from the NW.

For example, the shape/size of the aperture of the RIS-NCR to be used may be determined by a bitmap/parameter indicating the on/off state of the element of the RIS to be used.

The shape/size of the aperture in the second/third mode (for example, the aperture in a parallelogram (rhombus) shape) may be indicated by a specific method. The specific method may be, for example, a method based on the lengths and the angle of two sides with respect to a specific point (for example, a reference point) of the element of the RIS (the element of the RIS to be selected).

In the third mode, the size/number of the subarrays to be used may be additionally indicated.

According to the second example, the element/aperture of the RIS to be used can be appropriately determined/selected.

<Considerations of Present Embodiment>

When a control channel (for example, SSB) is forwarded, the following two considerations arise, so that a beam specific to UE generated from a codebook is not practical and is difficult to adopt.

First, since the aperture of the RIS is large, the beam width of the UE-specific beamforming is narrow, and it is difficult to effectively cover a wide area.

In a case where a wide area cannot be effectively covered, a significant allocation of SSB resources is needed, or a significant change to the SSB scheme is needed as in the existing method described above. In a case where the allocation of the SSB resources is increased, the allocation of the resources to other channels (or signals) is relatively decreased, resulting in a decrease in the throughput of the entire system and a decrease in the resource utilization efficiency. In a case where the significant change to the SSB scheme occurs, a significant change also occurs in the gNB and/or the UE, so that it is difficult to maintain compatibility between versions and the like.

Second, in the existing scheme, the gNB needs to use a significant number of SSBs for transmission to the RIS for forwarding, while the total availability of the SSBs (for example, the number of usable resources for the SSBs) is limited. For example, in a case where the RIS that has a size of 0.64 $m^2$ and is used in 30 GHz covers a range of $\pm 45°$ including the near field and the far field, approximately 300 narrow beams are required. Note that the 3dB beam width of the narrow beam is 0.79° in this case.

For example, in a case where the number of SSBs used is increased, the allocation of the resources to other channels (or signals) is relatively decreased, resulting in a decrease in the throughput of the entire system and a decrease in the resource utilization efficiency. A possible solution is to change (for example, relax) the total limit of the SSB, but the change in the total limit of the SSB causes a change in the gNB and/or the UE as well, so that it is difficult to maintain compatibility between versions and the like.

As described above, since the beam width of the UE-specific beam indicated by a codebook is very narrow, it is difficult to directly cover the area, and in a case where the RIS uses a narrow beam to forward SSBs, a considerable part of the limited SSB resources is consumed. Therefore, in the present embodiment, it is considered to generate a wide beam.

For example, in the present embodiment, a codebook-based indication method for the RIS to generate a wide beam will be described. Further, in the present embodiment, a control channel forwarding method will be described exemplarily based on the wide beam.

Note that the "indication" of a certain function (or operation) may indicate information for performing the function (or operation), or may indicate an operation such as transmission (or indication) of the information for performing the function (or operation). Note that the "indication" may be replaced with an indicator, information, a parameter, or the like. For example, a beam indication may indicate information for performing beam control, or may indicate an operation such as transmission (or indication) of the information for performing beam control.

<Proposal Overview>

In the following proposal, generation of a wide beam in the near field based on selection of control information related to beam generation will be described. The control information related to beam generation may be, for example, a codeword included in RTC (hereinafter, referred to as an RTC codeword). The RTC enables the wide beam generation without requiring generation of an additional special codeword. In addition, the RIS can generate a wide beam of any shape.

As a mechanism for selecting the RTC codeword for generating a wide beam in the near field, the codeword selection may be performed based on a geometric relationship between the RIS and the target area. For example, the RTC codeword may be selected by at least one of three parameters of the dimension of the target area, the angle, and the distance between the center of the target area and the center of the RIS array.

<Proposal 1: Codeword Selection>

In Proposal 1, the generation of a wide beam in the near field based on the RTC codeword selection will be described. Exemplarily, the focal position corresponding to the wide beam is determined based on the geometric optics principle.

In step 1 of the codeword selection, the position of the focus is calculated based on a geometric relationship between the RIS and the target area. The position of the focus may be referred to as a focal position or a focus in the following.

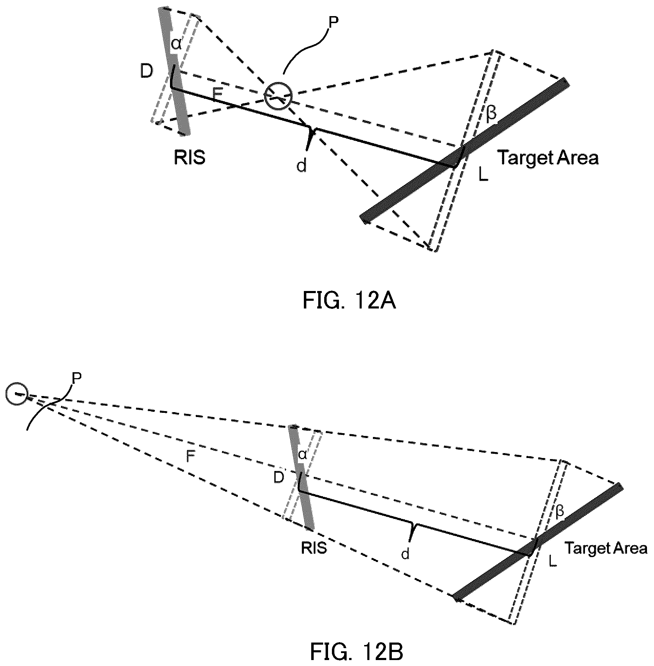

FIG. 12A is a diagram illustrating a first example of the calculation of the focal position. FIG. 12B is a diagram illustrating a second example of the calculation of the focal position. In FIGS. 12A and 12B, surface D indicates the surface of the RIS array, and surface L indicates the target area. Note that the RIS array may be an example of a radiation surface from which a signal (or a radio wave) from the RIS is radiated. Distance d indicates a distance between the center of surface D and the center of surface L. Angle $\alpha$ indicates an angle between surface D and a surface perpendicular to a straight line connecting the center of surface D and the center of surface L. Angle $\beta$ indicates an angle between surface L and a surface perpendicular to the straight line connecting the center of surface D and the center of surface L. In addition, in FIG. 12A, distance F indicates a distance between the center of surface D and actual focal position P, and in FIG. 12B, distance F indicates a distance between the center of surface D and virtual focal position P. In the following, distance F between the focal position and the RIS array (that is, surface D) may be referred to as a focal distance.

As illustrated in FIG. 12A, the actual focal position may be calculated as the focal position. In the case of FIG. 12A, distance F from the center of surface D to focal position P is represented by Equation (12).

$$\frac{F}{D'} = \frac{d-F}{L'}$$

$$\frac{F}{D \cos \alpha} = \frac{d-F}{L \cos \beta}$$

$$F = \frac{(d-F)D \cos \alpha}{L \cos \beta} \quad \text{... (Equation 12)}$$

Then, when distance F is calculated, a position vertically at distance F from the center of surface D (that is, the center of the RIS array) in the direction of surface L (that is, the direction of the target area) is determined as the actual focal position.

As represented by Equation (12), the focal position is calculated by the position and size of the RIS array, the position and size of the target area, an angle difference determined by a positional relationship between the RIS array and the target area, and the like, which are examples of the geometric relationship between the RIS array and the target area.

In addition, as illustrated in FIG. 12B, a virtual focal position may be calculated as the position of the focus. In the case of FIG. 12B, distance F from the center of surface D to focal position P is represented by Equation (13).

$$\frac{F}{D'} = \frac{d+F}{L'}$$

$$\frac{F}{D \cos \alpha} = \frac{d+F}{L \cos \beta}$$

$$F = \frac{(d+F)D \cos \alpha}{L \cos \beta} \quad \text{... (Equation 13)}$$

Then, when distance F is calculated, a position vertically at distance F from the center of surface D (that is, the center of the RIS array) in a direction opposite to the direction of surface L (that is, a direction opposite to the direction of the target area) is determined as the virtual focal position.

As represented by Equation (13), the focal position is calculated by the position and size of the RIS array, the position and size of the target area, an angle difference determined by a positional relationship between the RIS array and the target area, and the like, which are examples of the geometric relationship between the RIS array and the target area.

Note that whether to calculate the actual focal position or to calculate the virtual focal position may be defined by the specification or may be determined by an indication from the network. Whether to calculate the actual focal position or to calculate the virtual focal position may be dynamically switched or may be fixed.

In step 2 of the codeword selection, the RTC codeword is selected according to (based on) the calculated focal position. For example, an RTC codeword that achieves radio wave radiation whose focus matches (or is close to) the calculated focal position is selected. Note that, instead of selecting the RTC codeword according to the focal position, the RTC codeword may be selected according to focal distance F.

Note that the method of selection is not particularly limited. For example, the focal position and the RTC codeword may be associated with each other, and the RTC codeword may be selected based on the association. Alternatively, information indicating the RTC codeword (for example, an index associated with the codeword) may be calculated by specific arithmetic processing on a parameter used for the focal position or the calculation of the focal position, and the RTC codeword may be selected based on the calculated information. Further, the focal position may be quantized, and the RTC codeword associated with the quantized focal position may be selected. The focal position may be classified into any of a finite number of groups, and the RTC codeword corresponding to the classified group may be selected.

Note that the codeword to be selected may be changed according to the focal position (or the focal distance). For example, in a case where the focal position (or the focal distance) is within a predetermined range, the target area may be determined to be within a range of the near field, and the RTC codeword may be selected. In addition, for example, in a case where the focal position (or the focal distance) is not within a predetermined range, the target area may be determined to be within a range of the far field, and a codeword for generating a beam in the far field (for example, a codeword of the DFT codebook) may be selected.

The processing in step 1 and step 2 described above may be executed by the RIS, or at least one of the processing may be executed by the RIS and the remaining processing may be executed by the network (for example, the gNB). For example, a parameter related to the processing executed by the RIS may be provided by the network. Alternatively, both two pieces of processing may be executed by the network, and the RIS may generate a wide beam in response to an indication of the selected RTC codeword.

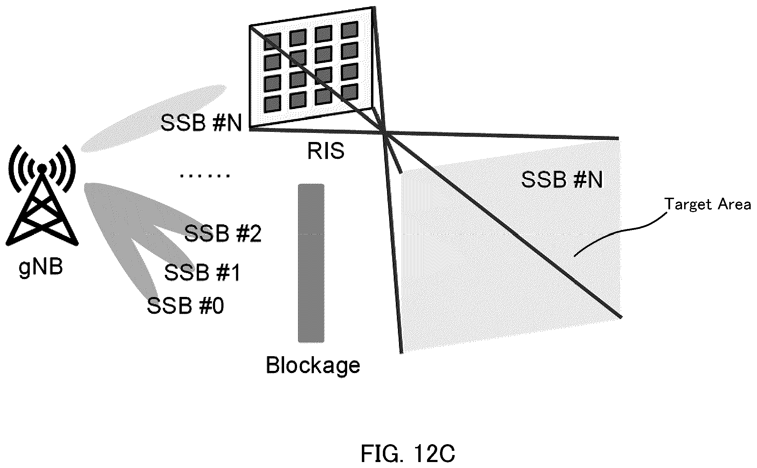

FIG. 12C is a diagram illustrating an example of the generated wide beam. FIG. 12C illustrates that SSB #N transmitted from the gNB is forwarded by the RIS. As illustrated in FIG. 12C, a wide beam that covers the target area can be generated to transmit SSB #N according to Proposal 1.

In the above-described Proposal 1, the RTC codeword for a wide beam in the near field that covers the target area can be appropriately selected by selecting the RTC codeword according to the focal position calculated based on a geometric relationship between the RIS array and the target area. For example, the RTC codeword is selected such that the focal position is set to a region between surface D (radiation surface) and surface L (target area) or a region on the opposite side of surface L across surface D. Therefore, a wide beam in the near field can be appropriately generated.

<Proposal 2>

In Proposal 2, an example of a method of shaping a wide beam will be described. Note that the shaping of a wide beam may be control of the shape of a wide beam based on the shape of the target area covered by the wide beam. In Proposal 2, generation of a multi-wide beam, control of an operation mode of the RIS, and a phase mask will be described as examples of the shaping of a wide beam.

<Proposal 2-1: Generation of Multi-Wide Beam>

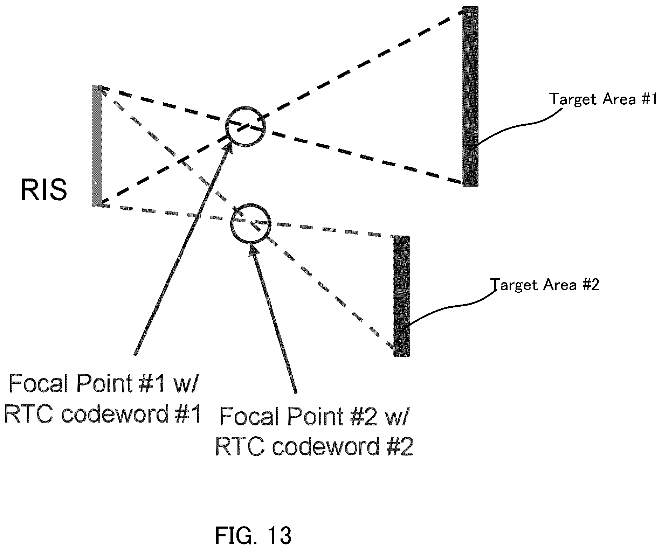

FIG. 13 is a diagram illustrating an example of the generation of a multi-wide beam. FIG. 13 illustrates an example of the RIS that generates beams for two target areas, which are target area #1 and target area #2.

In step 1 of the generation of a multi-wide beam, the focal positions are calculated based on the geometric relationship between the RIS and the target areas. The calculation method for the focal positions may be the same as that in Proposal 1 described above. Note that, in Proposal 2-1, as illustrated in FIG. 13, the focal positions are calculated for the plurality of target areas respectively.

In step 2 of the generation of a multi-wide beam, the RIS selects a plurality of RTC codewords of wide beams according to the beam shape for the target. In the example of FIG. 13, the RIS selects RTC codeword #1 corresponding to the beam shape covering target area #1 in accordance with focal point #1 for target area #1. Similarly, in the example of FIG. 13, the RIS selects RTC codeword #2 corresponding to the beam shape covering target area #2 in accordance with focal point #2 for target area #2.

Note that the selection method for selecting one RTC codeword for one focal point is not particularly limited. For example, one RTC codeword for one focal point may be selected in the same manner as in the above-described Proposal 1.

In step 3 of the generation of a multi-wide beam, the RIS performs complex superposition of the selected codewords to acquire a multi-beam codeword. In the example of FIG. 13, the complex superposition of RTC codeword #1 and RTC codeword #2 is performed to acquire a multi-beam codeword. Note that the multi-beam codeword may be a codeword for generating a plurality of beams. In addition, a codeword for generating a plurality of wide beams may be referred to as a multi-wide beam codeword.

For example, the multi-wide beam codeword obtained from n (n is an integer of 1 or more) wide beam codewords is represented by the following Equation (14). Note that n wide beam codewords may correspond to n target areas or may correspond to n focal positions.

$$w_{multi} = e^{-j\varphi_{multi}} = e^{-j\arg(\alpha_1 w_1 + \cdots + \alpha_n w_n)} \quad \cdots \text{(Equation 14)}$$

Here, $w_{multi}$ is a multi-beam codeword, $w_l, ..., w_n$ are n wide-beam codewords (for example, RTC codewords), and $a_l, ..., a_n$ are power allocation elements.

According to Proposal 2-1 described above, even in a case where a plurality of target areas are present, a multi-wide beam that covers those target areas can be generated.

The processing of steps 1 to 3 described above may be executed by the RIS, or at least one of the processing may be executed by the RIS and the remaining processing may be executed by the network (for example, the gNB). Alternatively, each of the three pieces of processing may be executed by the network, and the RIS may generate a multi-wide beam in response to an indication of the selected RTC codewords.

Note that, in step 2 described above, a plurality of codewords corresponding to a plurality of focal positions are selected, and in step 3, the plurality of codewords are superposed to calculate a multi-wide beam codeword, but the present disclosure is not limited this example. For example, a plurality of focal positions and one multi-wide beam codeword corresponding to the plurality of focal positions may be associated with each other and stored. In this case, the multi-wide beam codeword is selected based on the correspondence without performing the arithmetic processing of the superposition as in step 3. In this case, a wide beam codeword corresponding to one focal position and the multi-wide beam codeword corresponding to the plurality of focal positions may be stored together.

In addition, in Proposal 2-1, the wide beam codeword (for example, the RTC codeword) selected in step 2 and the multi-wide beam codeword calculated in step 3 may be switched. For example, the codewords may be switched among a case where a wide beam is generated for target area #1, a case where a wide beam is generated for target area #2, and a case where a multi-wide beam is generated for both target area #1 and target area #2.

<Proposal 2-2: Control of Operation Mode of RIS>

The wide beam shaping may be realized by selectively modifying an operation mode of one or more elements in the RIS array. For example, the wide beam shaping may be realized by switching an operation mode of a specific element from a reflection mode to an absorption mode.

Note that the control of an operation mode of the RIS mainly includes the following operation modes.

- Reflection
- Refraction
- Absorption
- Scattering
- Modulation
- Transparent

According to Proposal 2-2 described above, even in a case where the shape of the target area is changed, a wide beam that covers the changed target area can be generated by the processing of changing operation modes of some elements. This reduces unnecessary radiation outside the target area, thereby avoiding an interference outside the target area and reducing power consumption.

<Proposal 2-3: Phase Mask>

The wide beam shaping may be realized by incorporating a random phase mask into a subset of RIS elements.

According to Proposal 2-3 described above, even in a case where the shape of the target area is changed, a wide beam that covers the changed target area can be generated by the processing of changing operation modes of some elements. This reduces unnecessary radiation outside the target area, thereby avoiding an interference outside the target area and reducing power consumption.

Note that Proposals 2-1 to 2-3 described above may be used in combination or may be used by switching between the proposals. For example, a multi-wide beam may be generated for a plurality of target areas by using Proposal 2-1, and the shape of the wide beam may be changed based on the shape of the target areas by using Proposal 2-2 and/or Proposal 2-3.

<Proposal 3>

In Proposal 2, three methods of wide beam shaping have been described. In Proposal 3, a method of wide beam shaping designed especially for a rectangular coverage area will be described.

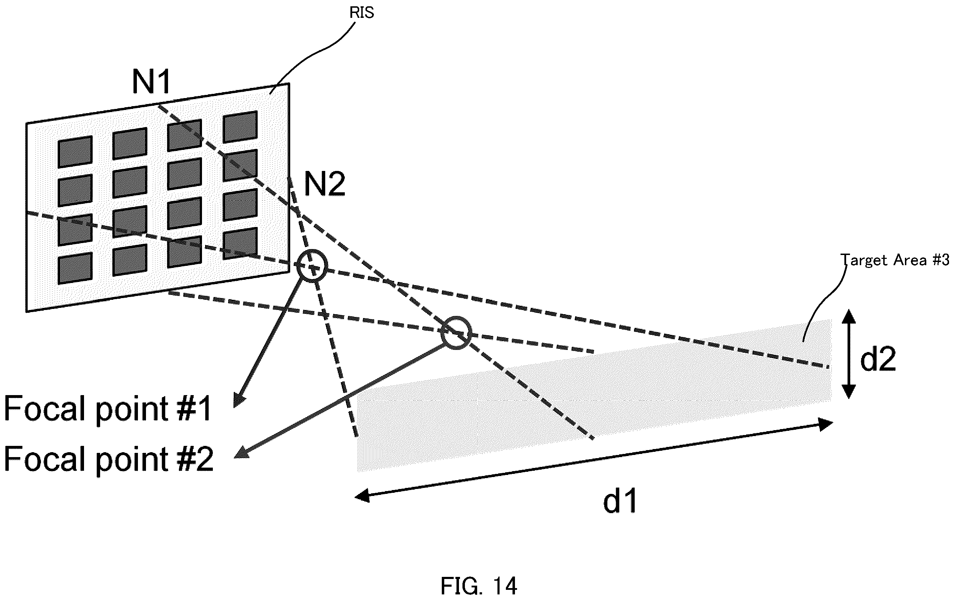

FIG. 14 is a diagram illustrating an example of Proposal 3. FIG. 14 illustrates the RIS and rectangular target area #3.

By selecting and combining the codewords from one-dimensional RTC, a rectangular area having any aspect ratio can be covered.

In step 1, the RIS aligns two directions (for example, dimensions) of the RIS with the horizontal direction and the vertical direction of the target area. Next, based on the principle of geometric optics, focal point #1 of the one-dimensional wide beam is calculated in the horizontal direction, and focal point #2 of the one-dimensional wide beam is calculated in the vertical direction.

In step 2, as in Equation (15), the Kronecker product of the corresponding one-dimensional RTC codewords is calculated to acquire a wide beam codeword.

$$w_{wide} = w_1 \otimes w_2 \quad \dots \text{(Equation 15)}$$

In Equation (15), $w_{wide}$ indicates a two-dimensional wide beam codeword, $w_1$ and $w_2$ indicate one-dimensional RTC codewords in the horizontal direction and the vertical direction respectively, and Expression (15) indicates that $w_{wide}$ is obtained by the Kronecker product of $w_1$ and $w_2$.

Proposal 3 described above enables expanding, reducing, and changing the shape of the target area, so that the coverage can be flexibly controlled. This reduces unnecessary radiation outside the target area, thereby avoiding an interference outside the target area and reducing power consumption.

Note that, in Proposal 3, a method of wide beam shaping designed for a rectangular coverage area has been described, but the present disclosure is not limited thereto. The wide beam shaping may be performed on any shape other than the rectangle. For example, in a case where the shape of the RIS array is rectangular and the shape of the target area is square, the wide beam shaping based on the shape of the target area may be performed by the same method as in Proposal 3. In addition, for example, in a case where the shape of the RIS array is circular and the shape of the target area is elliptical, the wide beam shaping based on the shape of the target area may be performed by the same method as in Proposal 3.

Note that Proposals 2 and 3 may be used in combination. For example, the wide beam that covers a rectangular target area may be generated for a plurality of rectangular target areas by combining Proposal 2-1 with Proposal 3. In addition, a wide beam that covers a target area in the shape of a partially missing rectangle may be generated by combining Proposal 2-2 or Proposal 2-3 with Proposal 3.

<Supplement>

The following is a supplement regarding the wide beam used in each of the above proposals.

For example, in a case where a focused beam and a wide beam are generated in the RIS arrays of the same size, the focused beam can achieve a relatively high SNR, and the wide beam can effectively cover a specific area. Therefore, the focused beam is suitable for transmitting a data channel, and the wide beam is suitable for transmitting a control channel. However, a channel other than a data channel (for example, a control channel, a broadcast channel, or the like) or a signal other than a signal mapped on a data channel may be transmitted using the focused beam. In addition, a channel other than a control channel (for example, a data channel, a broadcast channel, or the like) or a signal other than a signal mapped on a control channel may be transmitted using the wide beam.

For example, in a case where RIS array #1 having a certain size and RIS array #2 having a size twice the size of RIS array #1 generate wide beams for a certain coverage area, the SNR gain of the wide beam of RIS array #2 is about 3 dB larger than the SNR gain of RIS array #1. Similarly, in a case where the size of the RIS array is four times larger, the SNR gain of the wide beam is about 6 dB larger.

For example, in a case where the RIS array generates wide beams for coverage area #1 having a certain size and coverage area #2 having a size twice the size of coverage area #1, the SNR gain of the wide beam in coverage area #2 is about 1.5 dB smaller than the SNR gain in coverage area #1. Similarly, in a case where the coverage area is four times larger, the SNR gain of the wide beam is about 3 dB smaller.

As described above, for example, the size of a coverage area, the size of the RIS array, and the SNR gain of a wide beam indicate a specific relationship. Therefore, according to at least one of the size of a coverage area, the size of the RIS array, and the SNR gain of a wide beam, the other two may be configured. For example, at least one of the size of a coverage area and the size of the RIS array may be configured according to the desired SNR gain, or the size of the RIS array may be configured according to the desired SNR gain and the desired size of a coverage area.

The method based on the multi-wide beam generation may be used for the beam shaping by using a beamforming gain from each of the RIS elements. The beam shaping based on the multi-wide beam generation increases a gain in a coverage area as compared with the method based on the control of an operation mode and the phase mask.

The method based on the control of an operation mode and the phase mask can be easily implemented.

According to each of the above-described proposals and combinations thereof, a wide beam in the near field can be appropriately generated and the coverage can be flexibly controlled, thereby enabling control for generating an appropriate beam according to a range to be covered.

Note that the RIS may transmit capability information (for example, capability) indicating whether to support each of the proposals and combinations of the proposals to the gNB.

Next, use cases in which the wide beam generation based on each of the above proposals is used will be described. Note that the use cases are not limited to the examples described below.

<Use Case 1>

As described above, according to each of the proposals, the beam width is dynamically controlled depending on the focus based on the RTC, thereby enabling a flexible coverage. In Use Case 1, control of the flexible coverage of the RIS will be described. Note that the RIS in Use Case 1 may be referred to as RIS-NCR.

<First Example of Use Case 1>

In the first example, the RIS switches beams between forwarding of a control channel and forwarding of a data channel.

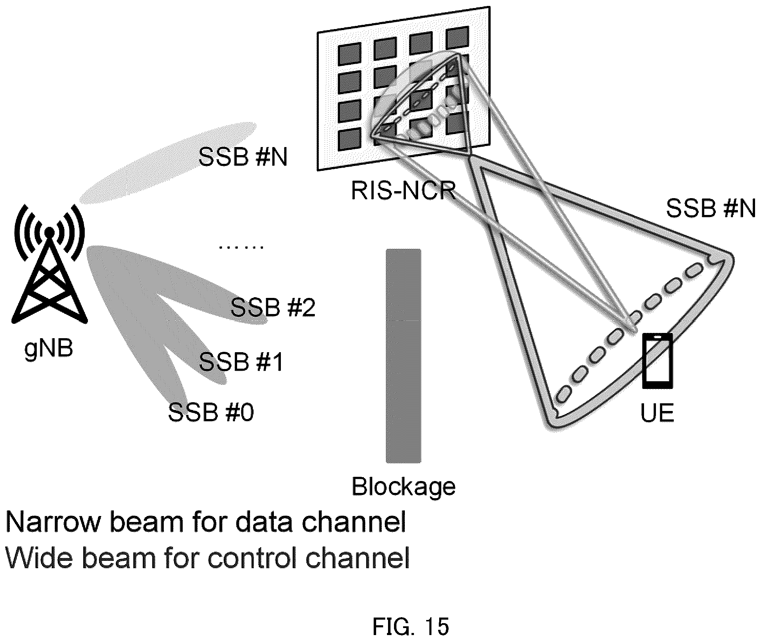

FIG. 15 is a diagram illustrating the first example of Use Case 1. For example, in the first example, a wide beam is generated for forwarding of a control channel. In contrast, in the first example, a UE-specific narrow beam is generated for forwarding of a data channel. In addition, in the first example, a coverage area is appropriately adjusted based on feedback from the UE.

Note that the adjustment method based on feedback from the UE is not limited. For example, the UE may provide feedback to the network (for example, the gNB) via a UL signal, and the network may provide the feedback to the RIS. Alternatively, the UE may directly provide the feedback to the RIS. The RIS to which the feedback is provided may adjust the coverage area based on the feedback. Alternatively, the UE may provide feedback to the network, the gNB may determine information to be provided to the RIS (for example, information on the position of the UE, information on the target area, a codeword, or the like) for adjusting the coverage area based on the feedback, and the gNB may provide the determined information to the RIS.

For example, the wide beam generated based on the approaches described in Proposals 1 to 3 effectively covers the target area, and thus, it is suitable for forwarding a control channel.

For example, in the forwarding of a data channel, the UE-specific narrow beam generated by the RIS using the RTC can increase the SNR gain in the near field region of the RIS as compared with the existing DFT beam. Therefore, using the narrow beam for forwarding of a data channel makes it possible to achieve a high data rate of the UE.

<Second Example of Use Case 1>

In the second example of Use Case 1, a coverage area is adaptively adjusted. For example, a coverage area of a wide beam is reduced by using feedback information of the UE. By reducing a coverage area of a wide beam, a higher gain of the wide beam can be obtained for forwarding a control channel.

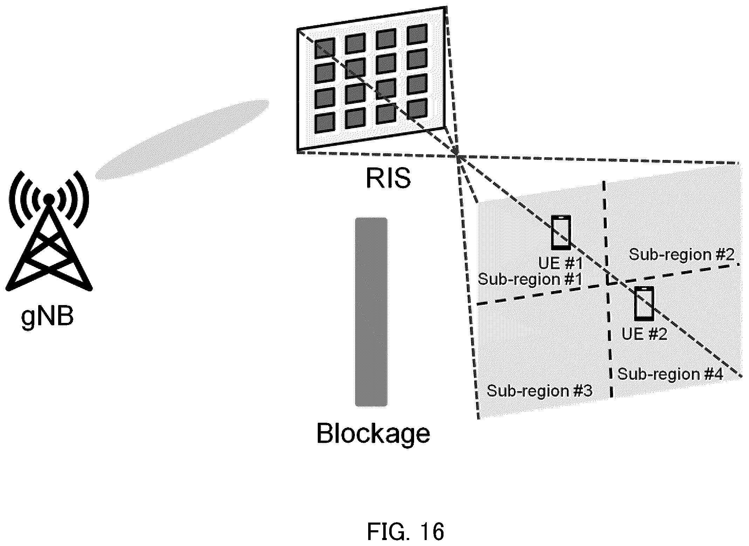

FIG. 16 is a diagram illustrating the second example of Use Case 1. FIG. 16 illustrates an example in which the RIS generates a wide beam for a coverage area where UE #1 and UE #2 are present.

For example, the RIS switches the wide beam among a plurality of patterns of the wide beam. The UE measures the reference signal received power (RSRP) and provides feedback. The network dynamically adjusts the coverage range of the wide beam based on the feedback.

Examples of the dynamic adjustment of the coverage include, for example, the following Alternation 1 (Alt. 1) and Alt. 2.

<Alt. 1>

The coverage of a wide beam may be switched from a large size to a small size. The network determines whether the UE is present in the coverage of the current wide beam based on the feedback of the UE regarding the RSRP measurement and dynamically adjusts the coverage.

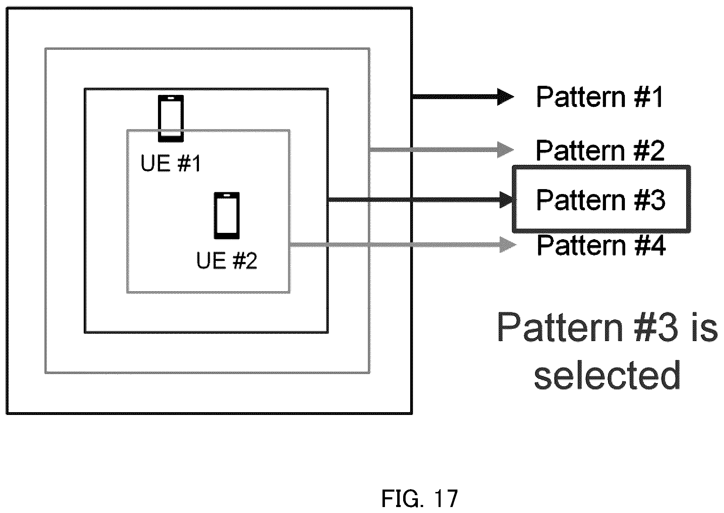

FIG. 17 is a diagram illustrating Alt. 1 of the second example of Use Case 1. In the example illustrated in FIG. 17, coverage patterns of four wide beams having different sizes from pattern #1 to pattern #4 are illustrated. For example, the RIS first uses the wide beam of the largest pattern #1 among four patterns, and UE #1 and #2 measure the RSRP for pattern #1. The RIS switches the wide beam of pattern #1 to the wide beam of pattern #2 based on the feedback of the UEs. Similarly, the RIS sequentially switches to the wide beam of pattern #3 and the wide beam of pattern #4, and pattern #3 is selected consequently.

<Alt. 2>

A coverage area may be divided into a plurality of sub-regions. Then, wide beams formed in different shapes from each other may be switched to scan one or more combinations of the sub-regions. In this case, the network determines the presence or absence of the UE in each of the sub-regions based on the feedback received from the UE.

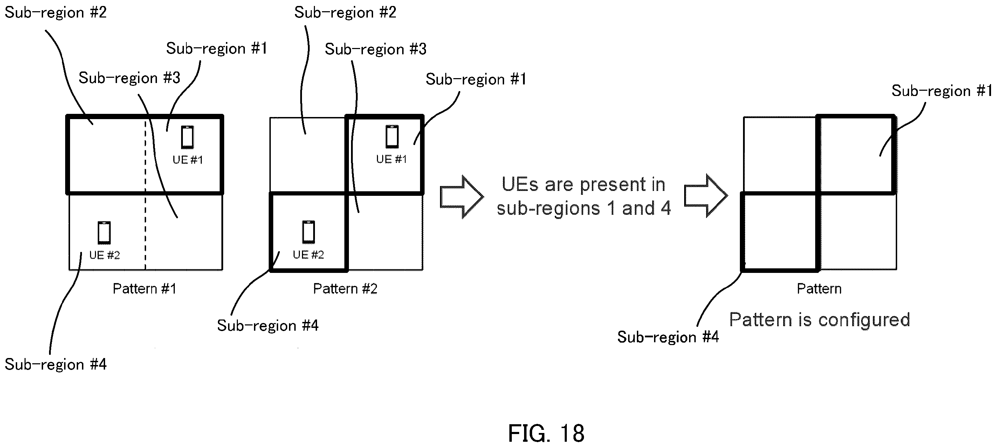

FIG. 18 is a diagram illustrating Alt. 2 of the second example of Use Case 1. In the example illustrated in FIG. 18, the coverage area is divided into four sub-regions. In FIG. 18, pattern #1 including sub-region #1 and sub-region #2 and pattern #2 including sub-region #1 and sub-region #4 are switched exemplarily. Note that the two patterns are illustrated in FIG. 18, but a pattern other than the two patterns may be switched to.

UE #1 present in sub-region #1 and UE #2 present in sub-region #4 measure the RSRP for each of a plurality of patterns (in FIG. 18, pattern #1 and pattern #2). For example, in the case of FIG. 18, in pattern 1, the measurement result of UE #1 indicates a high RSRP, but the measurement result of UE #2 indicates a low RSRP. In contrast, in pattern #2, the measurement result of each of UE #1 and UE #2 indicates a high RSRP. The RIS selects pattern #2 based on the feedback of the UEs indicating such measurement results.

<Use Case 2>

As described above, the beam width is dynamically controlled depending on the focus based on the RTC, thereby enabling a flexible coverage. In Use Case 2, control of the flexible coverage in RIS-aided mega MIMO will be described.

<First Example of Use Case 2>

In the first example, beams are switched between transmission of a control channel and transmission of a data channel.

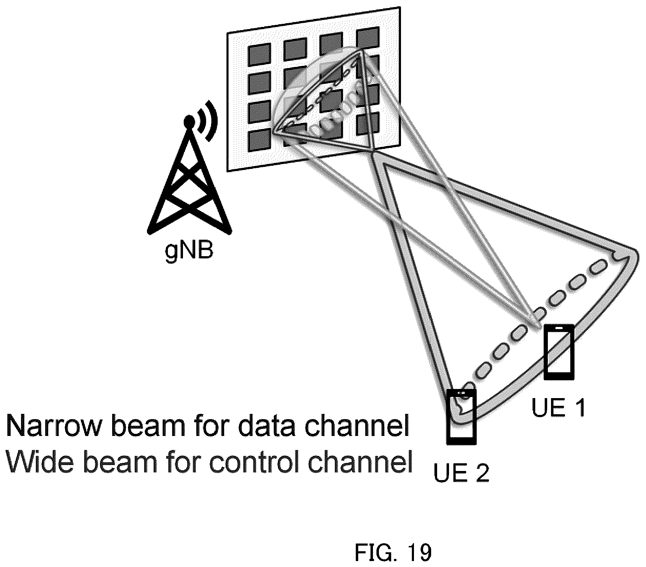

FIG. 19 is a diagram illustrating the first example of Use Case 2. In the example of FIG. 19, a narrow beam generated for the transmission of a data channel and a wide beam generated for the transmission of a control channel are illustrated. Note that the example illustrated in FIG. 19 corresponds to a case where the gNB transmits a signal via the RIS, rather than a case where the RIS forwards a signal transmitted from the gNB.

For example, in the first example, a wide beam is generated for the transmission of a control channel. In the first example, a UE-specific narrow beam is generated for the transmission of a data channel. In addition, in the first example, estimation of the SNR gain for the UE-specific narrow beam can be achieved by using a measurement result of the RSRP for the wide beam.

For example, the wide beam generated based on the approaches described in Proposals 1 to 3 effectively covers the target area, and thus, it is suitable for the transmission of a control channel.

Taking SSB transmission as an example, in a case where the target area is attempted to be covered solely by the narrow beam transmission, a problem occurs because the number of SSB resources is limited. Therefore, the use of a wide beam is considered in the SSB transmission.

For example, in the transmission of a data channel, the UE-specific narrow beam generated by the RIS using the RTC can increase the SNR gain in the near field region of the RIS as compared with the existing DFT beam. Therefore, using the narrow beam for forwarding of a data channel makes it possible to achieve a high data rate of the UE.

<Second Example of Use Case 2>

In the second example of Use Case 2, estimation of the SNR gain of a data channel will be described. It is possible to estimate the SNR gain of a data channel by using measurement information obtained from a control channel and beam pattern information. In addition, the SNR gain of a wide beam and the SNR gain of a narrow beam have a correlation, and the SNR gain of a data channel is estimated by using measurement data from a control channel.

In step 1, a difference between the average SNR gain in a coverage area and the SNR gain of a UE-specific beam is estimated based on pattern information of a wide beam.

In step 2, the SNR gain of a data channel is estimated by combining the measurement information, such as RSRP of a control channel, with the pattern information of the wide beam.

The processing in step 1 to step 2 may be executed by the RIS, or at least one of the processing may be executed by the RIS, and the remaining processing may be executed by the network (for example, the gNB).

<Use Case 3>

In Use Case 3, beam refinement will be described. For example, considering that the availability of CSI-RS resources is limited, it is not realistic to use a narrow beam for beam scanning of a CSI-RS. Instead, a wide beam CSI-RS scanning method in which the limited CSI-RS resources are effectively used to improve beam refinement is considered.

Since the UE recognizes a pattern associated with a wide beam of each CSI-RS, the beam refinement can be realized by analyzing the measurement result such as the RSRP. After that, a codeword corresponding to the refined beam can be reported to the network.

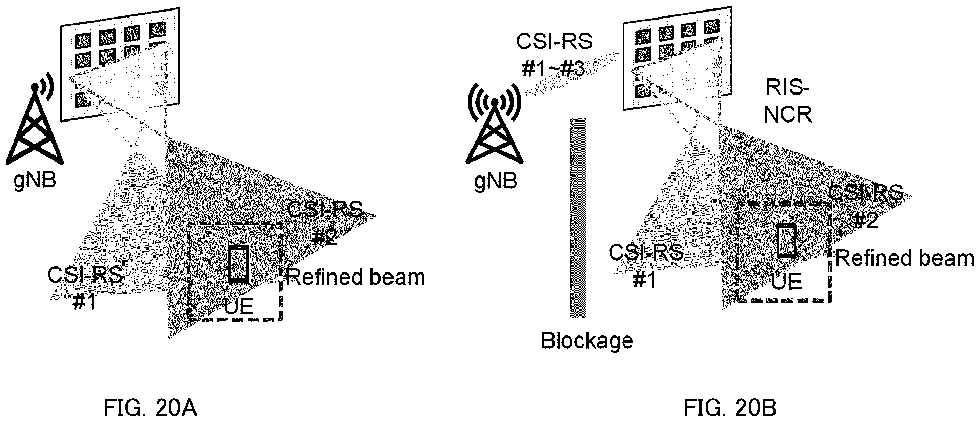

FIG. 20A is a diagram illustrating a first example of Use Case 3. FIG. 20B is a diagram illustrating a second example of Use Case 3. FIG. 20A corresponds to the above-described Use Case 2 (RIS-aided Mega MIMO), and FIG. 20B corresponds to an example in which the RIS forwards a signal transmitted from the gNB.

In step 1 of Use Case 3, the UE performs measurement for CSI-RSs. In step 2, the UE selects wide beams on which a plurality of CSI-RSs are transmitted (hereinafter, referred to as CSI-RS wide beams) based on the measurement result. For example, the CSI-RS wide beams whose RSRPs are close to each other are selected. Then, the pattern of a target refinement beam as the intersection of the selected wide beam patterns is specified. In step 3, the UE reports a codeword corresponding to the refined beam to the network.

In the example of FIGS. 20A and 20B, the UE measures CSI-RSs #1 to #3, and the UE selects the wide beams on which CSI-RSs #1 and #2 are transmitted and whose RSRPs are close to each other. Then, the UE specifies the pattern of the target refinement beam as the intersection of the patterns of the wide beams on which CSI-RSs #1 and #2 are transmitted. The UE reports the codeword corresponding to the refined beam to the network.

As in Use Case 3, the refinement of a beam allows the RIS to generate a more appropriate wide beam for the UE.

< Potential Influence on Specification>

Next, a potential influence on the specification will be described. In other words, in the following, a description will be given of matters that may be included in the specification when the specification is developed in the future.

For example, in the following, wide beam generation by the RIS, control of an operation mode of the RIS, and an SSB forwarding method for the RIS will be described. Note that the SSB forwarding method for the RIS may be, for example, a method of using a wide beam.

The wide beam generation by the RIS includes matters such as measurement of a coverage area and feedback, an indication of a beam type, and an indication of a codeword.

The control of an operation mode of the RIS includes matters such as an indication of an operation mode.

The SSB forwarding method for the RIS includes an indication of power control for an SSB. The indication of power control for an SSB may be, for example, an indication from the gNB to the RIS.

<Wide Beam Generation by RIS>

<Measurement of Coverage Area and Feedback>

The network may determine a coverage area based on measurement by the UE and report geometric information in order to indicate a codeword needed for generating a wide beam. Here, information measured and reported by the UE may be at least one of RSRP, Reference Signal Received Quality (RSRQ), a Received Signal Strength Indicator (RSSI), a time difference between Rx and Tx, and a Round Trip Time (RTT).

In addition, the information reported by the UE may include position information of the UE determined by a global positioning system (GPS) or the like, and information on a relative position between the US and the gNB (or the RIS) estimated using a signal received by the UE.

The signal measured by the UE may be an existing signal or may be a signal for indicating a codeword needed for generating a wide beam, which is different from the existing signal.

<Indication of Beam Type>

A beam for a data channel may be a narrow beam (or a focused beam) as the beam type. A beam for a control channel may be a wide beam.

Note that the beam type is not limited to these. For example, a wide beam may be used as a beam for broadcasting. Alternatively, the beam may be selected according to the type, the number, the use, or the like of a signal included in the channel.

<Indication of Codeword in Proposal 1>

Regarding the indication of a codeword in Proposal 1 described above, for the wide beam generation in Proposal 1, "D_2" indicating the distance between the RIS and the UE in Example 1-1 of the first example of the related art described above (for example, the section of "Parameters Related to Codebook/Precoder" described above) may be replaced with "F" indicating the focal distance in Proposal 1.

Note that, as a method of providing the F to the RIS, any one of the following two options may be applied.

Option 1: "F" is directly provided by the network (for example, the gNB).

Option 2: The parameters D, d, L, $\alpha$, $\beta$, and the like described in Proposal 1 are provided by the network. The RIS calculates F based on D, d, L, $\alpha$, and $\beta$ and either Equation (12) or Equation (13) in Proposal 1.

Note that, in Option 1 and Option 2, a value of a parameter may be directly provided, information in which the value of the parameter is quantized may be provided, a value obtained by converting the value of the parameter by specific arithmetic may be provided, or an index or the like associated with the value of the parameter may be provided.

<Wide Beam Generation by RIS>

<Wide Beam Shaping: Multi-Wide Beam Generation in Proposal 2>

An indication of a plurality of codewords for a multi-wide beam may be the same as the indication of a codeword described in the first example and/or the second example of the related art. Note that, "D_2" indicating the distance between the RIS and the UE in Example 1-1 of the first example of the related art (for example, the section of "Parameters Related to Codebook/Precoder" described above) is replaced with "F" indicating the focal distance.

A plurality of codewords may be indicated by the network for one time unit. A power allocation factor of each codeword may be indicated by the network. The RIS may calculate a multi-beam codeword based on Equation (14) in Proposal 2.

<Wide Beam Shaping: Control of Operation Mode of RIS in Proposal 2>

Here, three options will be described. Any one of the three options may be applied, or two or more of the three options may be applied.

In Option 1, the operation mode is indicated for each element in the RIS array or for each group of elements in the RIS array. In this Option 1, a control signal (or control signaling) indicated from the network to the RIS may include N indications of the operation mode for N elements or groups of elements (N is an integer of 1 or more). Note that the number of indications of the operation mode may not be N for N elements or N groups of elements. For example, in a case where N elements are distinguished into K ways (K is an integer of 1 or more and less than N), the number of indications of the operation mode may be K. Note that the group of elements may include one or more elements.

In Option 2, one operation mode is indicated for a set of elements in the RIS array or a set of groups of elements in the RIS array. Note that the set of elements includes zero or more elements. In addition, the set of groups of elements includes zero or more groups. In this Option 2, a control signal (or control signaling) indicated from the network to the RIS may include one indication of the operation mode. In addition, in this Option 2, the control signaling indicates a set of elements or a set of groups of elements corresponding to the indicated operation mode. Note that there may be a plurality of indications of the operation mode in Option 2. For example, an indication for the first operation mode may be associated with an indication for the first set of elements or the first set of groups of elements, and an indication for the second operation mode may be associated with an indication for the second set of elements or the second set of groups of elements.

In Option 3, a set of elements or a set of element groups in the RIS array is indicated. Then, a default operation mode is applied to the indicated set of elements or the indicated set of element groups.

Note that the number of bits needed for the above-described indication of the operation mode may depend on the total number of operation modes supported by the capability of the RIS and/or the total number of operation modes configured in advance by the network. For example, the number of bits needed for the above-described indication of the operation mode may be different depending on the total number of operation modes supported by the capability of the RIS and/or the total number of operation modes configured in advance by the network.

<Wide Beam Shaping: Phase Mask in Proposal 2>

A set of elements or a set of element groups in the RIS array is indicated by the network. The RIS applies a random phase to the indicated set of elements or the indicated set of element groups.

<Indication of Codeword in Proposal 3>

The indication of a codeword in Proposal 3 may be the same as the indication of a codeword described in the first example and/or the second example of the related art. Note that, "D_2" indicating the distance between the RIS and the UE in Example 1-1 of the first example of the related art (for example, the section of "Parameters Related to Codebook/-Precoder" described above) is replaced with the focal distance. Note that, in Proposal 3, there are two types of focal distances, which are "F1" corresponding to focal point #1 in the horizontal direction and "F2" corresponding to focal point #2 in the vertical direction, and thus, "D_2" indicating the distance between the RIS and the UE in the related art is replaced with the focal distances "F1" and "F2".

For example, Equation (5) explained in the related art described above is replaced with the following Equation (16).

$$\mathbf{w} = \mathbf{w}_{N_1, O_1, k_1, D, L_1} \otimes \mathbf{w}_{N_2, O_2, k_2, D, L_2}$$

$$\left[\mathbf{w}_{N_i, O_i, k_i, D, L_i}\right]_n = \exp\left(2\pi j \frac{n k_i}{O_i N_i} + \pi j \frac{\left(n^2 - n N_{\mathrm{RP}}\right)\left(L_i^2 - k_i'^2\right)}{O_i^2 N_i^2 F_i}\right)$$

$$n = 0, 1, \dots O_i N_i - 1$$

$$k_i = 0, 1, \dots O_i N_i - 1$$

$$k_i' = \begin{cases} k_i & \text{if } k_i \leq O_i N_i / 2 \\ O_i N_i - k_i & \text{otherwise} \end{cases}$$

$$i = 1, 2$$

$$\dots \text{(Equation 16)}$$

<RIS Operation Mode>

The RIS is introduced to operate in various modes including a reflection mode, a refraction mode, a scattering mode, an absorption mode, a modulation mode, and the like. In order to achieve various purposes, such as interference cancellation, beam shaping, and performance improvement in a specific area (for example, intelligent omni-surfaces (IOS)), it is necessary to control the operation modes of all or specific elements of the RIS.

Hereinafter, a mode for transitioning from an idle state to an operating state, a reflection mode and a refraction mode, a multi-beam indication, and a modulation will be described.

<From Idle State to Operating State>

Here, the idle state corresponds to, for example, the scattering mode and/or the absorption mode. The operating state corresponds to, for example, the reflection mode, the refraction mode, and/or the modulation mode.

In the idle state, the energy absorbed by the system may be used as power of the RIS-MT in order to avoid potential interference from the RIS.

At least one of the following four options may be applied regarding the indication for switching in the idle state.

In Option 1, a specific signal is defined. When detecting the specific signal from the network, the RIS is switched from the idle state to the operating state. Alternatively, when detecting the specific signal from the network, the RIS is switched from the operating state to the idle state.

In Option 2, an idle indication or an operation mode indication is applied to one or more subsequent time units until an idle indication or an operation mode indication is newly received.

In Option 3, the idle state or the operating state is indicated in units of time.

In Option 4, similar to NCR, the operation mode is used in a case where a valid beam or codebook is indicated for the time unit, and the idle mode is used in the other cases.

<Reflection Mode and Refraction Mode>

This mode may be, for example, intelligent omni-surfaces (IOS).

In a case of the IOS, power distribution for both a reflection coverage area and a refraction coverage area is dynamically adjusted based on a specific requirement.

The power distribution for the reflection and the refraction may be indicated by the network. Either one of two options may be applied to this indication. In Option 1, an indication for the power distribution is applied to the subsequent time unit until a new indication is received. In Option 2, the power distribution is indicated in units of time.

<Indication of Multi-Beam>

For example, it is assumed that communication and position estimation (for example, positioning) are performed at the same time.

Both the number of beams and the power allocation between the beams are dynamically adjusted based on the actual need according to a specific requirement.

For example, although it is assumed that communication and position estimation (for example, positioning) are performed at the same time, the case where communication and position estimation are performed at the same time and a case where one of communication and position estimation is performed may be switched. In addition, there may be a case where one of the number of beams and the power allocation between the beams is dynamically adjusted based on the actual need and the other is not adjusted.

<Modulation Mode>

In the modulation mode, the RIS modulates an incident signal, for example.

The RIS may be used to modulate a signal of an incident wave. By adjusting a phase shift of each element in the RIS, the signal may be modulated and various functions, such as shaping of the signal, encoding of information to the incident wave, and the like, may be enabled.

Whether the RIS modulates a signal may be indicated by the network. At least one of two options may be applied to this indication. In Option 1, an indication as to whether the RIS modulates a signal is applied to the subsequent time unit until a new indication is received. In Option 2, whether the RIS modulates a signal is indicated in units of time.

<SSB Forwarding Method for RIS>

In the existing method, the RIS forwards an SSB transmitted by the gNB by using a plurality of narrow beams. However, in these methods, usually, a significant allocation of SSB resources is included, or a significant change to the SSB method is required.

Meanwhile, in the SSB forwarding method for the RIS according to the above proposal, the RIS forwards an SSB resource transmitted by the gNB to the UE by using a wide beam, in contrast to the existing proposal.

The above proposal reduces the necessity for a significant allocation of SSB resources.

<Power Indication for SSB>

In order to ensure that the SNR of an SNR forwarded by the RIS using a wide beam reaches a demodulation threshold of one or more UEs within a coverage area, the power of a beam for the SSB transmitted from the base station to the RIS may be adjusted by a method different from a method for a beam for another SSB.

<Influence of SSB Forwarding by RIS on Specification>

In the existing specification, transmit power of an SSB is provided by a higher layer parameter (for example, ss-PBCH-Block Power). Further, EPRE of a CSI-RS is derived based on the ss-PBCH-BlockPower and an offset to the Tx power of the SSB provided by the higher layer parameter. In such a derivation, the derivation method needs to be extended in a case where the power of different SSBs is different from each other.

Therefore, downlink transmit power of the SSB is provided by a higher layer parameter for each SSB or for each group of SSBs. At least one of two variations may be applied to the provision of the parameter.

Variation 1: The Energy Per Resource Element (EPRE) of the first SSB group (for example, SSBs directly transmitted to the UE) is provided using an existing parameter. The EPRE of another SSB group (for example, SSBs transmitted to the RIS) other than the first SSB group is provided by a new parameter. Note that the first SSB group may be an SSB group that is transmitted first.

Variation 2: The EPRE of the first SSB group (for example, SSBs directly transmitted to the UE) is directly provided using an existing parameter. The EPRE of another SSB group (for example, SSBs transmitted to the RIS) other than the first SSB group is provided as an offset to the EPRE of the first SSB group.

In the existing specification, the EPRE of a CSI-RS is derived from an offset of the power provided by a higher layer parameter and downlink transmit power of the SSB (SSB DL Tx power). In such a derivation, the derivation method needs to be extended in a case where the power of different SSBs is different from each other. For example, any one of the following three options may be applied as the derivation method.

Option 1: In a case of a CSI-RS, it is indicated by a higher layer parameter. The EPRE of the CSI-RS is derived from the DL transmit power of any of SSBs.

Option 2: In a case of the EPRE of a CSI-RS, by default, it is derived from the DL transmit power of the first SSB or the first SSB group, or the SSB transmit power provided by an existing parameter (for example, a legacy parameter).

Option 3: In a case of a CSI-RS, when it is QCLed with an SSB, the EPRE of the CSI-RS is derived from the DL transmit power of the SSB that is used as a QCL reference RS.

Variation: The EPRE of a CSI-RS and/or the power offset of a CSI-RS for an SSB may be provided for each CSI-RS or may be provided for each CSI-RS group.

<Supplemental Matters>

In order to support Use Case 3 described above, the UE needs to support the RTC codebook.

The RTC codeword of each SSB or CSI-RS resource is indicated to the UE. Note that the indication of the codeword in this case may be the same as the indication of the codeword in the first example and/or the second example of the related art.

Note that, regarding the indication of the RTC codeword of each SSB or CSI-RS resource, "N_1", "N_2", "O_1", and "O_2" described in the first example and/or the second example of the related art (for example, the section of "Parameters Related to Codebook/Precoder" described above) may be set to the UE. In addition, "k_1", "k_2" that are codeword indices may be indicated for each SSB or CSI-RS resource to the UE. Note that "D_2" indicating the distance between the RIS and the UE may be indicated to the UE as is the case with the first example and/or the second example of the related art. Alternatively, focal distance F from the RIS to the focal position in the above proposals may be indicated for each SSB or CSI-RS resource to the UE.

The UE reports the RTC codeword of a refined beam identified by the UE. Either one of the following two options may be applied to the report.

Option 1: The report includes indices k_1 and k_2 of the codeword of the refined beam identified by the UE.

Option 2: The report includes indices k_1 and k_1 of the codeword of the refined beam identified by the UE. Further, the report includes an index of the SSB or the CSI-RS and an L1-RSRP/SINR of the SSB or the CSI-RS.

Note that, in the above-described embodiment, a description has been given of an example of processing in a downlink in which the RIS forwards a signal transmitted by the gNB to the UE, but the present disclosure is not limited thereto. The present disclosure may be applied to processing in an uplink in which the RIS forwards a signal transmitted by the UE to the gNB, or may be applied to processing in which the RIS forwards a signal transmitted by the UE to UE other than the UE.

In addition, in the above-described embodiment, an example in which one RIS is provided between the gNB and the UE has been described, but the present disclosure is not limited thereto. For example, a plurality of RISs may be provided between the gNB and the UE. For example, the first RIS may forward a signal transmitted by the gNB to the second RIS, and the second RIS may forward the signal to the UE. In addition, in this case, the first RIS may generate a multi-beam (for example, a multi-wide beam described above) to forward a signal to a plurality of second RISs, and each of the plurality of second RISs may further forward the signal to the UE.

Note that, in the present disclosure, "A/B" and "at least one of A and B" may be replaced with each other. Further, in the present disclosure, "A/B/C" may mean "at least one of A, B, and C".

In the present disclosure, notify, activate, deactivate, indicate, select, configure, update, determine, and the like may be replaced with each other. In the present disclosure, support, control, be able to control, operate, and be able to operate may be replaced with each other.

In the present disclosure, radio resource control (RRC), an RRC parameter, an RRC message, a higher layer parameter, a field, an information element (IE), a configuration, and the like may be replaced with each other. In the present disclosure, a medium access control (MAC) control element (CE), an update command, an activation/deactivation command, and the like may be replaced with each other.

In the present disclosure, higher layer signaling may be any of the following or a combination thereof: radio resource control (RRC) signaling, medium access control (MAC) signaling, broadcast information, another message (for example, a message from a core network such as a positioning protocol (for example, an NR positioning protocol A (NRPPa)/an LTE positioning protocol (LPP)) message), and the like.

In the present disclosure, MAC signaling may use, for example, a MAC control element (MAC CE) or a MAC protocol data unit (PDU). Broadcast information may be, for example, a master information block (MIB), a system information block (SIB), remaining minimum system information (RMSI), other system information (OSI), or the like.

In the present disclosure, physical layer signaling may be, for example, downlink control information (DCI), uplink control information (UCI), or the like.

In the present disclosure, an aperture, an antenna array, an array, a subarray (a plurality of antenna elements, a part of an array), a panel, an RIS, an RIS array, a scattering element array, and the like may be replaced with each other. In the present disclosure, an antenna, an antenna element, a scattering element, and the like may be replaced with each other.

In the present disclosure, an NCR, an RIS, an NCR including an RIS, a network node, an apparatus, an IAB, an IAB- mobile termination (MT), an IAB- distribution unit (DU), an IAB- central unit (CU), a terminal, a base station, a relay station, a relay apparatus, a repeater, a reflector, a transponder, an RIS-NCR, an RIS-type NCR, an extended NCR, and the like may be replaced with each other.

<Block Configuration Diagram>

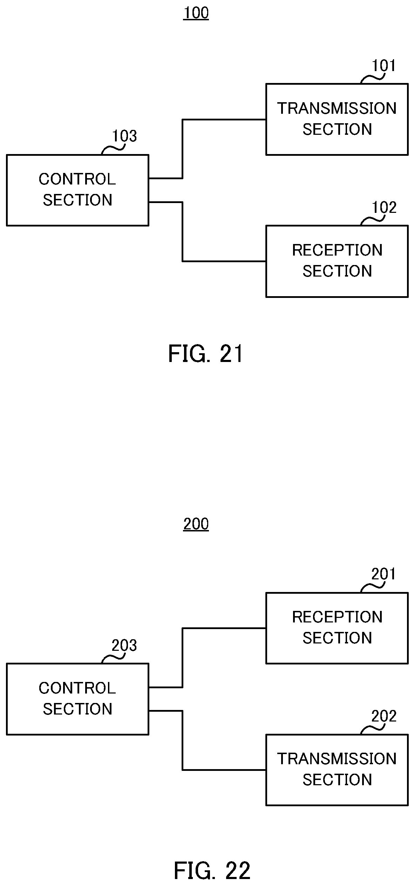

FIG. 21 is a block diagram illustrating an example of a configuration of base station 100 according to an embodiment of the present disclosure. Base station 100 includes, for example, transmission section 101, reception section 102, and control section 103. Base station 100 communicates with terminal 200 (see FIG. 22) by radio. Note that transmission section 101 and reception section 102 may be collectively referred to as a communication section. The control section may be referred to as a processing section, a processor, or the like.

Transmission section 101 transmits a DL signal to terminal 200. For example, transmission section 101 transmits the DL signal under the control of control section 103. For example, the DL signal may include information indicating scheduling related to signal transmission of terminal 200 (for example, an UL grant), control information of a higher layer, or the like.

For example, transmission section 101 transmits various control signals (control signals of a higher layer or the like), reference signals, data signals, and the like to terminal 200 and/or radio apparatus 300 as the DL signal. Transmission section 101 transmits various signals, channels, configuration information, control information, and the like described in the above embodiment to terminal 200 as the DL signal, for example.

For example, transmission section 101 transmits information on the control of terminal 200 generated by control section 103 to terminal 200. In addition, for example, transmission section 101 transmits information on the control of radio apparatus 300 generated by control section 103 to radio apparatus 300. Further, transmission section 101 transmits a data signal generated by control section 103 to terminal 200.

Reception section 102 receives a UL signal transmitted from terminal 200. For example, reception section 102 receives the UL signal under the control of control section 103. In addition, reception section 102 may receive a UL signal transmitted from radio apparatus 300.

For example, reception section 102 receives a signal including terminal capability information (for example, UE capability) of terminal 200, various control signals, reference signals, data signals, and the like from terminal 200 as the UL signal. Reception section 102 may also receive a signal including capability information (for example, capability) of radio apparatus 300.

Control section 103 controls the overall (communication) operation of base station 100, including the transmission processing in transmission section 101 and the reception processing in reception section 102.

For example, control section 103 acquires information such as data and control information from a higher layer, and outputs the information to transmission section 101. Further, control section 103 outputs the data, control information, and/or the like received from reception section 102 to a higher layer.

For example, control section 103 allocates resources to be used for DL signal transmission and reception and/or resources to be used for UL signal transmission and reception, based on the signal (e.g., the data, the control information and/or the like) received from terminal 200 and/or the data, the control information and/or the like acquired from a higher layer. Information on the allocated resources may be included in control information to be transmitted to terminal 200.

Control section 103 executes operations other than the transmission and reception described in the above embodiment (note that the operations may be executed by transmission section 101 and/or reception section 102).

In addition, control section 103 may generate control information related to a forwarding operation of radio apparatus 300. Control section 103 may transmit an indication (for example, control information) related to communication control of radio apparatus 300 via transmission section 101.

FIG. 22 is a block diagram illustrating an example of a configuration of terminal 200 according to an embodiment of the present disclosure. Terminal 200 includes, for example, reception section 201, transmission section 202, and control section 203. Terminal 200 communicates with base station 100 (see FIG. 21) by radio, for example. Note that reception section 201 and transmission section 202 may be collectively referred to as a communication section.

Reception section 201 receives a DL signal transmitted from base station 100. For example, reception section 201 receives the DL signal under the control of control section 203.

For example, reception section 201 receives various control signals, reference signals, data signals, and the like from base station 100 as the DL signal. Reception section 201 receives various signals, channels, configuration information, control information, and the like described in the above embodiment from base station 100 as the DL signal, for example.

For example, reception section 201 receives a signal from base station 100.

Transmission section 202 transmits a UL signal to base station 100. For example, transmission section 202 transmits the UL signal under the control of control section 203.

For example, transmission section 202 transmits a signal including information on the processing capability of terminal 200, various control signals, reference signals, data signals, and the like to base station 100 as the UL signal.

Control section 203 controls the overall (communication) operation of terminal 200, including the reception processing in reception section 201 and the transmission processing in transmission section 202.

For example, control section 203 acquires information such as data and control information from a higher layer, and outputs the information to transmission section 202. Further, control section 203 outputs, for example, the data, the control information and/or the like received from reception section 201 to a higher layer.

Control section 203 executes operations other than the transmission and reception described in the above embodiment (note that the operations may be executed by reception section 201 and/or transmission section 202).

Note that a signal received by terminal 200 from base station 100 may be a signal directly transmitted from base station 100 or may be a signal transmitted from base station 100 and forwarded by radio apparatus 300. In addition, a signal transmitted by terminal 200 to base station 100 may be directly received by base station 100 or may be forwarded by radio apparatus 300 and received by base station 100. In this case, terminal 200 need not recognize whether the signal is forwarded by radio apparatus 300.

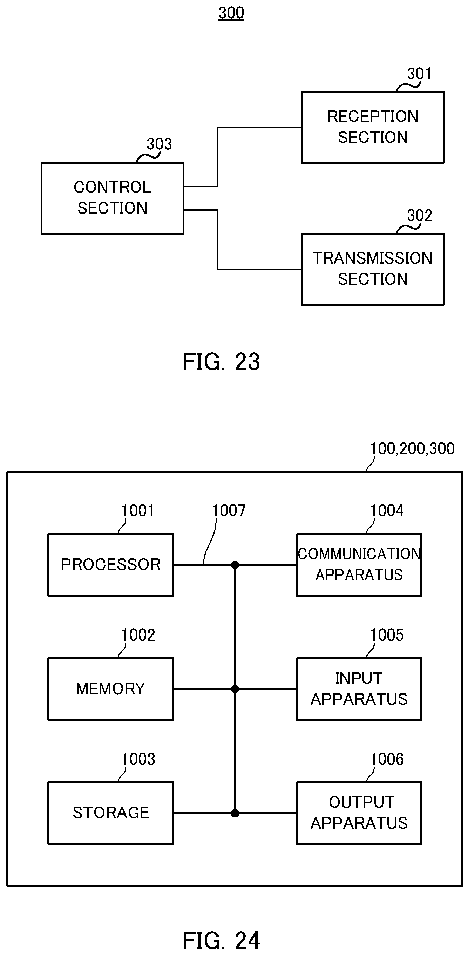

FIG. 23 is a block diagram illustrating an example of a configuration of radio apparatus 300 according to an embodiment of the present disclosure. Radio apparatus 300 corresponds to an example of the RIS. Radio apparatus 300 includes, for example, reception section 301, transmission section 302, and control section 303. Radio apparatus 300 communicates with base station 100 (see FIG. 21) and terminal 200 (see FIG. 22) by radio, for example. Note that reception section 301 and transmission section 302 may be collectively referred to as a communication section. The communication section may have a radiation surface (for example, an RIS array) that radiates a radio wave, and may transmit a signal from the radiation surface or may receive a signal on the radiation surface.

Reception section 301 receives a DL signal transmitted from base station 100. In addition, reception section 301 receives a UL signal transmitted from terminal 200. For example, reception section 301 receives the DL signal and the UL signal under the control of control section 303. Note that the received signal may include a signal addressed to base station 100, a signal addressed to terminal 200, and a signal addressed to radio apparatus 300. For example, reception section 301 receives a signal transmitted from base station 100 to terminal 200 (for example, a signal specific to terminal 200). Note that forwarding processing may include at least one of processing of transmitting, to terminal 200, a signal that is received from base station 100 and addressed to terminal 200 and processing of receiving a signal addressed to base station 100 from terminal 200.

Transmission section 302 transmits, to base station 100, the UL signal that is received from terminal 200 and addressed to base station 100. In addition, transmission section 302 transmits, to terminal 200, the DL signal that is received from base station 100 and addressed to terminal 200. For example, transmission section 302 transmits the UL signal under the control of control section 303. For example, transmission section 302 forwards, to terminal 200, the signal that is received from base station 100 and addressed to terminal 200.

Control section 303 controls the overall (communication) operation of radio apparatus 300, including the reception processing in reception section 301 and the transmission processing in transmission section 302.

For example, control section 303 generates a beam to be used by transmission section 302. Control section 303 selects (determines) a codeword based on a geometric relationship (for example, a focal position or a focal distance) between radio apparatus 300 and a target area (an area covered by radio apparatus 300) using acquired information on the target area. Then, control section 303 executes control to generate the beam by applying the determined codeword.

Control section 303 executes operations other than the transmission and reception described in the above embodiment (note that the operations may be executed by reception section 301 and/or transmission section 302).

Note that radio apparatus (for example, the RIS) 300 in the present disclosure may be an example of a communication apparatus. In addition, radio apparatus 300 in the present disclosure may be referred to by another name, such as a forwarding apparatus or a relay apparatus. Further, radio apparatus 300 in the present disclosure may be replaced with terminal 200 (for example, UE). For example, radio apparatus 300 may be regarded as terminal 200 having a forwarding function (or a relay function).

Radio apparatus (for example, the RIS) 300 described above includes control section 303 that determines a codeword based on a geometric relationship between radio apparatus 300 and an area covered by radio apparatus 300 and generates a beam that covers the area by applying the codeword, and a communication section that outputs a signal by using the beam.

In radio apparatus (for example, the RIS) 300 described above, control section 303 determines a focal position based on the geometric relationship between a radiation surface of the communication section (transmission section 302 and/or reception section 301) and the area and determines a codeword for focusing on the focal position.

In radio apparatus (for example, the RIS) 300 described above, when a plurality of the areas are present, control section 303 determines a focal position based on the geometric relationship between each of the plurality of areas and the radiation surface, determines an area codeword for focusing on the focal position corresponding to each of the plurality of areas, and determines a codeword by specific arithmetic processing on the area codeword corresponding to each of the plurality of areas.

In radio apparatus (for example, the RIS) 300 described above, the communication section includes a plurality of antenna elements placed on a plane, and control section 303 switches a configuration of at least one of the plurality of antenna elements according to a mode in which radio apparatus 300 operates.

In radio apparatus (for example, the RIS) 300 described above, control section 303 determines a codeword based on the shape of the area.

The present disclosure has been described, thus far. Note that the division of the items in the above description is not essential to the present disclosure, and matters described in two or more items may be used in combination as necessary, and matters described in one item may be applied to matters described in another item (as long as they do not contradict each other).

<Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a terminal, a radio apparatus, and so on according to one embodiment of the present disclosure may function as a computer that executes the processes of the radio communication method of the present disclosure. FIG. 24 is a diagram to show an example of a hardware structure of a base station, a terminal, and a radio apparatus according to an embodiment of the present disclosure. Physically, the above-described base station 100, terminal 200, and radio apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and radio apparatus 300 may be configured to include one or more of apparatuses illustrated in the drawings, or may be configured not to include part of apparatuses.

Each function of base station 100, terminal 200, and radio apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blue-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, reception section 301, transmission section 302 and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminal 200, and radio apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

<Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

<Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

<Direction of Input and Output>

The information or signals described in this disclosure may be output from a higher layer (or lower layer) to a lower layer (or higher layer). The information or signals may be input or output through multiple network nodes.

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a boolean value (true or false), or by comparison of numerical values (e.g., comparison with a predetermined values).

<Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.
It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<System and Network>

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.
The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.
A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

<Mobile Station>

In the present disclosure, the terms "mobile station (MS)," "user terminal," "user equipment (UE)," and "terminal" may be used interchangeably.
A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 200 and radio apparatus 300 may have the functions of base station 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 and relay station 300 may have the functions of terminal 20 described above.

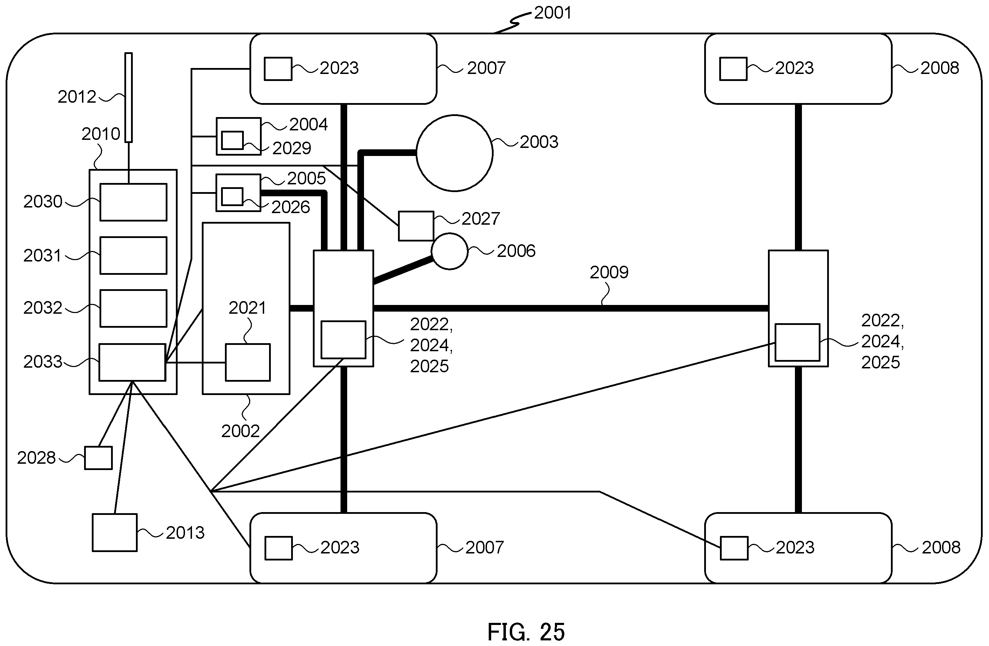

FIG. 25 illustrates an example of a configuration of vehicle 2001. As illustrated in FIG. 25, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

<Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot" and so on, depending on which standard applies.

<Meaning of "Based On">

The phrase "based on" (or "on the basis of') as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

<"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts," "circuits," "devices," etc.

<Open Form>

In the case where the terms "include," "including" and variations thereof are used in the present disclosure, these terms are intended to be comprehensive in the same way as the term "comprising." Further, the term "or" used in the present specification is not intended to be an "exclusive or."

<Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a," "an," and "the," the disclosure may include that the noun following these articles is plural.

<"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Industrial Applicability

An aspect of the present disclosure is useful for radio communication systems.

Reference Signs List

    10 Radio communication system
    20 NG-RAN
    100 Base station (gNB)
    200 Terminal (UE)
    300 Radio apparatus (RIS)
    101, 202, 302 Transmission section
    102, 201, 301 Reception section
    103, 203, 303 Control section
    101 Processor
    1002 Memory
    1003 Storage

1004 Communication apparatus
1005 Input apparatus
1006 Output apparatus
1007 Bus

**Claims**

1. A radio apparatus comprising:

   a control section that determines a codeword based on a geometric relationship between the radio apparatus and an area covered by the radio apparatus and generates a beam that covers the area by applying the codeword; and
   a communication section that outputs a signal by using the beam.

2. The radio apparatus according to claim 1, wherein,
   the control section:

   determines a focal position based on the geometric relationship between a radiation surface of the communication section and the area; and
   determines the codeword for focusing on the focal position.

3. The radio apparatus according to claim 1, wherein,
   when a plurality of the areas are present, the control section:

   determines a focal position based on the geometric relationship between each of the plurality of areas and a radiation surface of the communication section;
   determines an area codeword for focusing on the focal position corresponding to each of the plurality of areas; and
   determines the codeword by performing specific calculation processing on the area codeword corresponding to each of the plurality of areas.

4. The radio apparatus according to claim 1, wherein,

   the communication section includes a plurality of antenna elements placed on a plane; and
   the control section switches a configuration of at least one of the plurality of antenna elements according to a mode in which the radio apparatus operates.

5. The radio apparatus according to claim 1, wherein the control section determines the codeword based on a shape of the area.

6. A control method comprising:

   determining, by a radio apparatus, a codeword based on a geometric relationship between the radio apparatus and an area covered by the radio apparatus;
   generating, by the radio apparatus, a beam that covers the area by applying the codeword; and
   outputting, by the radio apparatus, a signal by using the beam.

FIG. 1

FIG. 2A

gNB

UE

FIG. 2B

gNB

UE

FIG. 3A

gNB

reflected
signal

UE

incident
signal

UE

RIS

EP 4 765 662 A1

FIG. 3B

FIG. 4

FIG. 5

**FIG. 6A**

$$-x_n \sin \omega$$

**FIG. 6B**

$$\sqrt{(x_n - x')^2 + D_F^2}$$

**FIG. 6C**

$$-x_n \sin \omega + \frac{x_n^2 \cos^2 \omega}{2D}$$

FIG. 7

FIG. 8

EP 4 765 662 A1

FIG. 9

FIG. 10

FIG. 11

FIG. 12A

FIG. 12B

FIG. 12C

Target Area #1

Target Area #2

RIS

Focal Point #1 w/
RTC codeword #1

Focal Point #2 w/
RTC codeword #2

FIG. 13

FIG. 14

FIG. 15

FIG. 16

FIG. 17

FIG. 18

Narrow beam for data channel
Wide beam for control channel

gNB

UE 1

UE 2

FIG. 19

CSI-RS
#1~#3

RIS-NCR

gNB

CSI-RS
#1

CSI-RS
#2

Refined beam

UE

Blockage

CSI-RS
#1

gNB

CSI-RS
#2

Refined beam

UE

FIG. 20A

FIG. 20B

EP 4 765 662 A1

100

FIG. 21

200

FIG. 22

300

FIG. 23

100,200,300

FIG. 24

FIG. 25

EP 4 765 662 A1

## INTERNATIONAL SEARCH REPORT

| International application No. |
|---|
| **PCT/JP2023/029897** |

### A. CLASSIFICATION OF SUBJECT MATTER

*H04B 7/0456*(2017.01)i; *H04B 7/06*(2006.01)i
FI: H04B7/0456 100; H04B7/06 952

According to International Patent Classification (IPC) or to both national classification and IPC

### B. FIELDS SEARCHED

Minimum documentation searched (classification system followed by classification symbols)

H04B7/0456; H04B7/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| X | JP 2010-534020 A (NORTEL NETWORKS LIMITED) 28 October 2010 (2010-10-28) paragraphs [0009]-[0030], [0043]-[0045], fig. 1-2 | 1, 4, 6 |
| A | | 2-3, 5 |
| A | US 2019/0173537 A1 (UNIVERSITY OF NOTRE DAME DU LAC) 06 June 2019 (2019-06-06) paragraphs [0041]-[0042], fig. 1 | 1-6 |
| T | WANG, Fan et al., Reconfigurable Intelligent Surface Aided Joint Communication And Positioning [online], 2023 IEEE 98th Vehicular Technology Conference (VTC2023-Fall), 10 October 2023, [retrieved on 27 February 2024], Retrieved from the Internet <URL: https://ieeexplore.ieee.org/document/10333393>, DOI: 10.1109/VTC2023-Fall60731.2023.10333393 sections I-IV, fig. 1-6 | 1-3, 6 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/029897**

| Patent document cited in search report | Publication date (day/month/year) | Patent family member(s) | Publication date (day/month/year) |
|---|---|---|---|
| JP 2010-534020 A | 28 October 2010 | US 2010/0173639 A1 paragraphs [0013]-[0031], [0040]-[0041], fig. 1-2 WO 2009/037580 A2 KR 10-2010-0049025 A CN 101868988 A | |
| US 2019/0173537 A1 | 06 June 2019 | (Family: none) | |

Form PCT/ISA/210 (patent family annex) (July 2022)

**EP 4 765 662 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022151016 A